# EUROPÄISCHE PATENTSCHRIFT

(11) **EP 2 305 531 B1**
(45) Veröffentlichungstag und Bekanntmachung des Hinweises auf die Patenterteilung: **22.02.2012**
(21) Anmeldenummer: 09171936.9
(22) Anmeldetag: 01.10.2009
(51) Int. Cl.: B61G 11/12, F16F 9/346, F16F 9/48, B61G 9/16

(54) **Vorrichtung zum Abdämpfen von Zug- und Druckkräften**
Device for damping forces of traction and compression
Dispositif d'amortissement des forces de traction et de compression

(43) Veröffentlichungstag der Anmeldung: 06.04.2011
(73) Patentinhaber: Voith Patent GmbH, 89522 Heidenheim (DE)
(72) Erfinder: Mombour, Klaus, 47477 Moers (DE)
(74) Vertreter: Trinks, Ole

(56) Entgegenhaltungen:
- EP-A1- 0 578 187
- EP-A2- 0 595 160
- DE-U1- 29 610 607
- US-A- 5 927 523

## Beschreibung

Die vorliegende Erfindung betrifft eine Vorrichtung zum Abdämpfen von Zug- und Druckkräften in Gestalt einer regenerativ aufgebauten Stoßsicherung. eine Vorrichtung mit dem im oberbegriff von Anspruch 1 definierten Merkmalen ist aus der DE-U-2 96 10607 bekannt.

Aus der Schienenfahrzeugtechnik ist es bekannt, zwischen den einzelnen Wagenkästen eines mehrgliedrigen Fahrzeuges Stoßsicherungen, beispielsweise in Gestalt von sogenannten Stoßfängern, einzusetzen. Hierbei handelt es sich um Bauelemente an Fahrzeugen, die im Falle eines Zusammenstoßes oder eines Aufpralls auf ein festes Hindernis Energie aufnehmen und dadurch Beschädigungen am Fahrzeug oder der Ladung verhindern sollen. Stoßfänger kommen vor allem an Schienenfahrzeugen vor, wobei meistens ein oder zwei an den Stirnseiten angebrachte Konstruktionsteile eingesetzt werden, die den Zweck haben, die auf das Schienenfahrzeug in dessen Längsrichtung von außen her einwirkenden waagerechten Druckkräfte aufzunehmen.

Dem Prinzip nach können bei Schienenfahrzeugen als Stoßsicherung zwei Arten von Stoßfängern zum Einsatz kommen, nämlich sogenannte "Zentralpuffer", bei denen die Stoßsicherung in der Längsachse des Fahrzeuges angebracht ist, so dass sich an jeder Stirnseite des Schienenfahrzeuges nur ein Puffer in der Mitte der Kopfschwelle befindet. Andererseits sind auch sogenannte "Seitenpuffer" bekannt, bei welchen sich zwei Puffer an der Stirnseite des Schienenfahrzeuges befinden.

Demnach ist es aus dem Gebiet der Schienenfahrzeugtechnik bekannt, beispielsweise bei einem mehrgliedrigen Schienenfahrzeug die einzelnen Wagenkästen mit sogenannten Seitenpuffern oder UIC-Puffern auszurüsten, wenn die Wagenkästen nicht über ein Drehgestellt miteinander verbunden sind und somit im Fahrbetrieb der Abstand zweier miteinander gekoppelter Wagenkästen variieren kann. Diese Seitenpuffer dienen dazu, die im normalen Fahrbetrieb beispielsweise beim Abbremsen oder Anfahren auftretenden Stöße aufzunehmen und Abzudämpfen.

Ferner ist es aus dem Stand der Technik bekannt, in einer Kupplungsstange, welche zum Übertragen von Zug- und Druckkräften zwischen zwei benachbarten Wagenkästen eines mehrgliedrigen Fahrzeuges eingesetzt wird, eine Stoßsicherung in Gestalt einer Zug-/Stoßeinrichtung zu integrieren. Diese Zug-/Stoßeinrichtung ist ausgelegt, Zug- und Druckkräfte bis zu einer definierten Größe aufzunehmen und abzudämpfen. Denkbar hierbei ist es beispielsweise, als Zug-/Stoßeinrichtung einen sowohl auf Zug als auch auf Druck belastbaren Federapparat einzusetzen, um auf diese Weise die im Betrieb auftretenden Zug- und Druckkräfte geeignet abdämpfen zu können.

Der vorliegenden Erfindung liegt die Aufgabe zugrunde, eine Vorrichtung anzugeben, welche ausgelegt ist, über einen möglichst großen Bereich sowohl in Zug- als auch in Druckrichtung wirkende Kräfte abzudämpfen, wobei die Vorrichtung verschleißfrei arbeitet und sich insbesondere durch ihre kurze Baulänge auszeichnet.

Diese Aufgabe wird erfindungsgemäß durch eine Vorrichtung zum Abdämpfen von Zug- und Druckkräften gelöst, welche ein in einem Gehäuse aufgenommenes Dämpfungssystem aufweist, welches sich aus einem Federapparat einerseits und einer hydraulischen Dämpfungseinrichtung andererseits zusammensetzt. Der Federapparat ist zwischen einem relativ zu dem Gehäuse des Dämpfungssystems ortsfesten ersten Anschlag und einem relativ zum ersten Anschlag verschiebbaren zweiten Anschlag angeordnet. Bei einer Bewegung des zweiten Anschlages relativ zu dem Gehäuse des Dämpfungssystems in Richtung des ersten Anschlages, wird der zwischen dem ersten und dem zweiten Anschlag aufgenommene Federapparat auf Druck belastet und komprimiert. Die Kompressionskraft des Federapparates wirkt dabei der Bewegung des zweiten Anschlages entgegen. In einer Ausführungsform der erfindungsgemäßen Lösung ist der zweite Anschlag ein gegen Federdruck des Federapparates verschiebbarer Ringkolben.

Die hydraulische Dämpfungseinrichtung des bei der erfindungsgemäßen Lösung zum Einsatz kommenden Dämpfungssystems weist eine mit Hydraulikflüssigkeit, wie beispielsweise Hydrauliköl, gefüllte erste Hydraulikkammer sowie eine ebenfalls mit Hydraulikflüssigkeit gefüllte zweite Hydraulikkammer auf. Wie es nachfolgend im Einzelnen beschrieben wird, sind die beiden Hydraulikkammern über ein erstes und ein zweites Überströmsystem miteinander verbunden, so dass Hydraulikflüssigkeit in gedrosselter Weise von der ersten Hydraulikkammer zu der zweiten Hydraulikkammer bzw. von der zweiten Hydraulikkammer zu der ersten Hydraulikkammer strömen kann.

Bei der erfindungsgemäßen Lösung ist vorgesehen, dass die zweite Hydraulikkammer zwischen die erste Hydraulikkammer und dem zweiten Anschlag ausgebildet ist. Im Einzelnen ist vorgesehen, dass der bereits erwähnte zweite Anschlag, welcher relativ zu dem Gehäuse des Dämpfungssystems und relativ zu dem ersten Anschlag in Längsrichtung des Dämpfungssystems verschiebbar ist, eine Wand der zweiten Hydraulikkammer ausbildet. Demnach wird der zweite Anschlag in Richtung des ersten Anschlages verschoben, wenn Hydraulikflüssigkeit von der ersten Hydraulikkammer in die zweite Hydraulikkammer strömt. Durch das Verschieben des zweiten Anschlages in Richtung des ersten Anschlages wird der zwischen dem ersten und dem zweiten Anschlag aufgenommene Federapparat komprimiert. Dabei wirkt die von dem Federapparat ausgehende Rückstellkraft dem Druck der Hydraulikflüssigkeit in der zweiten Hydraulikkammer entgegen.

Die von der Vorrichtung abzudämpfenden Zug- und Druckkräfte werden in das Dämpfungssystem über eine Kolbenstange eingeleitet, welche relativ zu dem Gehäuse des Dämpfungssystems in Längsrichtung verschiebbar ist und an seinem Endbereich einen Kolbenkopf aufweist, welcher in der ersten Hydraulikkammer aufgenommen ist. Im Einzelnen ist der Kolbenkopf der Kolbenstange in der ersten Hydraulikkammer relativ zu der ersten Hydraulikkammer verschiebbar aufgenommen und unterteilt bei einer Längsverschiebung relativ zu der ersten Hydraulikkammer die erste Hydraulikkammer in einen der Kolbenstange abgewandten vorderen Hydraulikkammerbereich und einen der Kolbenstange zugewandten hinteren Hydraulikkammerbereich.

Bei der Einleitung von Druckkräften in das Dämpfungssystem wird der Kolbenkopf relativ zu der ersten Hydraulikkammer in Richtung des vorderen Hydraulikkammerbereiches bewegt. Die in dem vorderen Hydraulikkammerbereich vorhandene Hydraulikflüssigkeit wird dabei zumindest teilweise verdrängt und strömt über das erste Überströmsystem in gedrosselter Weise zu dem hinteren Hydraulikkammerbereich sowie zu der zweiten Hydraulikkammer. Das Volumen der bei einer Längsbewegung des Kolbenkopfes relativ zu der ersten Hydraulikkammer aus dem vorderen Hydraulikkammerbereich verdrängten Hydraulikflüssigkeit entspricht dem Volumen, welches die Kolbenstange beim Einfahren in das Dämpfungssystem verdrängt. Da die Hydraulikflüssigkeit in idealer Weise nicht kompressibel ist, bewirkt das Überströmen der Hydraulikflüssigkeit von der ersten Hydraulikkammer zu der zweiten Hydraulikkammer, dass gleichzeitig der zweite Anschlag in Richtung des ersten Anschlages gegen die Federkraft des Federapparates verschoben wird.

Zusätzlich zu dem ersten Überströmsystem, welches ein Überströmen von Hydraulikflüssigkeit von der ersten Hydraulikkammer zu der zweiten Hydraulikkammer gestattet, weist die erfindungsgemäße Vorrichtung ferner ein zweites Überströmsystem auf. Dieses zweite Überströmsystem ermöglicht ein Überströmen von Hydraulikflüssigkeit von dem hinteren Hydraulikkammerbereich und der zweiten Hydraulikkammer zu dem vorderen Hydraulikkammerbereich.

Mit dem zweiten Überströmsystem wird eine Mittenrückstellung des Kolbens in seine neutrale Stellung bewirkt. Im Einzelnen bewegt sich der Kolbenkopf - nachdem er beispielsweise aufgrund einer Druckbeanspruchung zuvor relativ zu der ersten Hydraulikkammer in Richtung des vorderen Hydraulikkammerbereiches verschoben wurde - wieder in seine Ausgangslage zurück, sobald keine Druckkraft mehr über die Kolbenstange und den Kolbenkopf in das Dämpfungssystem eingeleitet wird. Dann nämlich wird durch die Rückstellkraft des Federapparates von der zweiten Hydraulikkammer Hydraulikflüssigkeit über das zweite Überströmsystem zurück in den vorderen Hydraulikkammerbereich der ersten Hydraulikkammer gedrückt. Auf diese Weise bewirkt der Federapparat einen Rückhub der Kolbenstange, so dass sich der Kolbenkopf um eine definierte Mittenstellung bewegt.

Selbstverständlich ist die erfindungsgemäße Vorrichtung nicht nur zum Abdämpfen von Druckkräften ausgelegt, welche über die Kolbenstange und den Kolbenkopf in das Dämpfungssystem eingeleitet werden. Vielmehr ermöglicht die erfindungsgemäße Lösung auch ein zuverlässiges Abdämpfen von Zugkräften, die auf die Kolbenstange wirken und den Kolbenkopf relativ zu der ersten Hydraulikkammer in Richtung des hinteren Hydraulikkammerbereiches bewegen. Bei der Längsbewegung des Kolbenkopfes relativ zu der ersten Hydraulikkammer in Richtung des hinteren Hydraulikkammerbereiches strömt Hydraulikflüssigkeit von dem hinteren Hydraulikkammerbereich über das bereits erwähnte zweite Überströmsystem zu dem vorderen Hydraulikkammerbereich der ersten Hydraulikkammer. Gleichzeitig bewegt sich der zweite Anschlag relativ zu dem Gehäuse des Dämpfungssystems in Richtung der ersten Hydraulikkammer, infolgedessen das Volumen der zweiten Hydraulikkammer reduziert wird. Das Volumen, um welches die zweite Hydraulikkammer bei einer Zugbeanspruchung reduziert wird, entspricht dem Volumen des Kolbenstangenbereiches, welcher bei der Zugbeanspruchung aus dem Dämpfungssystem und insbesondere der hydraulischen Dämpfungseinrichtung des Dämpfungssystems herausgefahren wird.

Bei der erfindungsgemäßen Lösung ist vorgesehen, dass das erste Überströmsystem, über welches bei einer Längsbewegung des Kolbenkopfes relativ zu der ersten Hydraulikkammer in Richtung des vorderen Hydraulikkammerbereiches Hydraulikflüssigkeit von dem vorderen Hydraulikkammerbereich in den hinteren Hydraulikkammerbereich und in die zweite Hydraulikkammer strömt, mindestens ein sogenanntes Multiplikatorventil aufweist. In funktioneller Hinsicht ist das Multiplikatorventil mit einem über eine Feder vorgespanntem Ventil vergleichbar, welches den Durchgang von Hydraulikflüssigkeit nur von dem vorderen Hydraulikkammerbereich zu den hinteren Hydraulikkammerbereich und die zweite Hydraulikkammer ermöglicht. Im Einzelnen ist das Multiplikatorventil ausgelegt, vor seinem Eingang einen einstellbaren Druck aufrechtzuerhalten, um bei einer Druckbelastung des Dämpfungssystems im vorderen Hydraulikkammerbereich einen Staudruck zu erhalten.

Um zu verhindern, dass bei einer Druckbelastung des Dämpfungssystems, d.h. bei einer Längsbewegung des Kolbenkopfes relativ zu der ersten Hydraulikkammer in Richtung des vorderen Hydraulikkammerbereiches, Hydraulikflüssigkeit über das zweite Überströmsystem an dem mindestens einen Multiplikatorventil vorbei in den hinteren Hydraulikkammerbereich der ersten Hydraulikkammer bzw. in den zweiten Hydraulikkammerbereich strömen kann, ist das zweite Überströmsystem mit mindestens einem Kugelrückschlagventil versehen, welches nur den Durchgang von Hydraulikflüssigkeit von dem hinteren Hydraulikkammerbereich und der zweiten Hydraulikkammer in den vorderen Hydraulikkammerbereich gestattet.

Demnach bleibt festzuhalten, dass sowohl bei einer Längsbewegung des Kolbenkopfes relativ zu der ersten Hydraulikkammer in Richtung des vorderen Hydraulikkammerbereiches als auch bei einer Längsbewegung des Kolbenkopfes relativ zu der ersten Hydraulikkammer in Richtung des hinteren Hydraulikkammerbereiches Hydraulikflüssigkeit über das erste bzw. zweite Überströmsystem aus dem vorderen Hydraulikkammerbereich in den hinteren Hydraulikkammerbereich bzw. von dem hinteren Hydraulikkammerbereich in den vorderen Hydraulikkammerbereich gedrückt wird. Dadurch, dass das erste und zweite Überströmsystem ein gedrosseltes Überströmen der Hydraulikflüssigkeit ermöglicht, entsteht sowohl bei einer Zugbelastung als auch bei einer Druckbelastung des Dämpfungssystems ein Dämpfungseffekt. Bei einer Druckbelastung des Dämpfungssystems, wenn sich also der Kolbenkopf relativ zu der ersten Hydraulikkammer in Richtung des vorderen Hydraulikkammerbereiches bewegt, wird durch die Längsbewegung des Kolbenkopfes Hydraulikflüssigkeit aus dem vorderen Hydraulikkammerbereich über das erste Überströmsystem in die zweite Hydraulikkammer gedrückt. Die dadurch in der zweiten Hydraulikkammer bewirkte Druckerhöhung hat zur Folge, dass der zweite Anschlag, welcher einerseits die zweite Hydraulikkammer begrenzt, in Richtung des ersten Anschlages bewegt wird. Dies hat eine Komprimierung des zwischen dem ersten und dem zweiten Anschlag angeordneten Federapparates zur Folge hat. Demnach entsteht bei einer Druckbelastung des Dämpfungssystems der Dämpfungseffekt nicht nur durch ein gedrosselte Überströmen der Hydraulikflüssigkeit über das erste Überströmsystem, sondern auch durch eine Kompression des Federapparates zwischen dem ersten und dem zweiten Anschlag.

Je nach Zug- und Druckbeanspruchung bewegt sich der Kolbenkopf um eine definierte Mittenstellung. Dynamisch wird dabei der durch den Kolbenkopf in der ersten Hydraulikkammer verursachte Druck kompensiert, indem die Hydraulikflüssigkeit über das erste Überströmsystem in die zweite Hydraulikkammer in gedrosselter Weise abgeleitet wird. Auf diese Weise wird jede Belastung entlang der Längsachse des Dämpfungssystems unverzüglich und insbesondere ohne Verschleiß ausgeglichen, da die spezielle Anordnung und der Aufbau des Dämpfungssystems es ermöglicht, dass sowohl Zug- als auch Druckkräfte ohne zusätzliche Funktionselemente abgedämpft werden können.

Vorteilhafte Weiterbildungen der erfindungsgemäßen Vorrichtung zum Abdämpfen von Zug- und Druckkräften sind in den abhängigen Ansprüchen angegeben.

Wie zuvor ausgeführt, ist bei der erfindungsgemäßen Lösung vorgesehen, dass bei einer Druckbelastung des Dämpfungssystems, d.h. beim Einfahren des Kolbenkopfes in die erste Hydraulikkammer, Hydraulikflüssigkeit aus dem vorderen Hydraulikkammerbereich über das erste Überströmsystem in den hinteren Hydraulikkammerbereich und in die zweite Hydraulikkammer strömt. Insbesondere ist dabei vorgesehen, dass in dem ersten Überströmsystem mindestens ein Multiplikatorventil vorgesehen ist, über welches die beim Einfahren des Kolbenkopfes aus dem vorderen Hydraulikkammerbereich verdrängte Hydraulikflüssigkeit strömt. Durch das Vorsehen des Multiplikatorventils im ersten Überströmsystem wird erreicht, dass der Druck in der zweiten Hydraulikkammer vervielfacht wird. Dieser in der zweiten Hydraulikkammer sich einstellende Druck wirkt gegen den zweiten Anschlag und bewirkt eine Längsverschiebung des zweiten Anschlages relativ zu dem ersten Anschlag gekoppelt mit einer Kompression des zwischen dem ersten und dem zweiten Anschlag vorgesehenen Federapparates. Beim Ausfahren des Kolbens aus dem Dämpfungssystem hingegen fließt die Hydraulikflüssigkeit über ein einfaches Kugelrückschlagventil zurück zum vorderen Hydraulikkammerbereich der ersten Hydraulikkammer. Somit wirkt die Federkraft des Federapparates direkt auf den Pufferhub der hydraulischen Dämpfungseinrichtung.

In einer bevorzugten Weiterbildung der erfindungsgemäßen Lösung ist vorgesehen, dass die hydraulische Dämpfungseinrichtung eine dynamische Dämpfung ermöglicht. Hierzu ist ein Kanalsystem vorgesehen, welches die erste Hydraulikkammer und insbesondere den vorderen Hydraulikkammerbereich der ersten Hydraulikkammer mit dem Eingang des mindestens einen Multiplikatorventils verbindet, wobei der effektive Strömungsquerschnitt des Kanalsystems davon abhängt, wie weit der Kolbenkopf relativ zu der ersten Hydraulikkammer in Richtung des vorderen Hydraulikkammerbereiches verschoben ist. Demnach ist bei dieser bevorzugten Weiterbildung der erfindungsgemäßen Vorrichtung vorgesehen, dass der effektive Strömungsquerschnitt des Kanalsystems abhängig von dem Hub des Kolbens seinen effektiven Strömungsquerschnitt ändert. Bei Druckbelastung des Dämpfungssystems, d.h. beim Einfahren des Kolbenkopfes in die erste Hydraulikkammer, strömt somit die Hydraulikflüssigkeit aus dem vorderen Hydraulikkammerbereich in gedrosselter Weise zu dem hinteren Hydraulikkammerbereich bzw. zu der zweiten Hydraulikkammer, wobei der Grad der Drosselung von dem Kolbenhub abhängt.

In einer bevorzugten Realisierung der zuletzt genannten Ausführungsform, bei welcher eine dynamische Dämpfung mit Hilfe eines hubabhängigen effektiven Strömungsquerschnittes des den vorderen Hydraulikkammerbereich mit dem Eingang des Multiplikatorventils verbindenden Kanalsystems erreicht wird, ist vorgesehen, dass das Kanalsystem eine Vielzahl von Kanäle aufweist, welche die erste Hydraulikkammer mit dem Eingang des Multiplikatorventils verbinden, wobei die Kanäle in Längsrichtung der ersten Hydraulikkammer voneinander beabstandet in der ersten Hydraulikkammer münden. Beim Einfahren des Kolbens in die erste Hydraulikkammer werden demnach mit zunehmendem Kolbenhub die einzelnen Kanäle des Kanalsystems nacheinander durch den Kolbenkopf blockiert, so dass der effektive Strömungsquerschnitt, über den die aus dem vorderen Hydraulikkammerbereich verdrängte Hydraulikflüssigkeit zum Eingang des Multiplikatorventils strömen kann, mit zunehmendem Kolbenhub abnimmt. Hierbei ist zu berücksichtigen, dass die erfindungsgemäße Vorrichtung vorzugsweise derart ausgelegt ist, dass bei einem in die Vorrichtung eingeleiteten Stoß die Relativgeschwindigkeit der zusammenstoßenden Körper zueinander abnimmt. Damit reduziert sich auch die Eindruckgeschwindigkeit der Kolbenstange. Da die hydraulischen Kräfte unter anderem von der Eindrückgeschwindigkeit der Kolbenstange und dem effektiven Strömungsquerschnitt abhängen, über den die aus dem vorderen Hydraulikkammerbereich verhängte Hydraulikflüssigkeit zum Eingang des Multiplikatorventils strömen kann, wird der effektive Strömungsquerschnitt mit zunehmendem Hub der Kolbenstange verringert, um die hydraulischen Kräfte weitestgehend konstant zu halten.

Selbstverständlich kommen zur dynamischen Dämpfung auch andere Ausführungsformen in Frage. Beispielsweise ist es denkbar, eine hubabhängige Blende vorzusehen, so dass auf diese Weise der effektive Strömungsquerschnitt des Kanalsystems um so stärker verringert werden kann, je weiter der Kolbenkopf relativ zu der ersten Hydraulikkammer in Richtung des vorderen Hydraulikkammerbereiches verschoben ist.

Die zuvor beschriebene dynamische Dämpfung der hydraulischen Dämpfungseinrichtung ist nicht nur bei einer Druckbelastung, sondern auch bei einer Zugbelastung der Dämpfungseinrichtung von Vorteil. Insbesondere ist es bevorzugt, dass - wenn der Kolbenkopf relativ zu der ersten Hydraulikkammer maximal in Richtung des vorderen Hydraulikkammerbereiches verschoben ist - das zuvor genannte Kanalsystem, welches die erste Hydraulikkammer mit dem Eingang des Multiplikatorventils verbindet, mindestens einen Kanal aufweist, welcher in dem hinteren Hydraulikkammerbereich der ersten Hydraulikkammer mündet, und ferner mindestens einen Kanal aufweist, welcher in dem vorderen Hydraulikkammerbereich der ersten Hydraulikkammer mündet. Vorzugsweise sollte dabei der mindestens eine Kanal des Kanalsystems, welcher - wenn der Kolbenkopf maximal in Richtung des vorderen Hydraulikkammerbereiches der ersten Hydraulikkammer verschoben ist - in dem hinteren Hydraulikkammerbereich mündet, ein Kugelrückschlagventil aufweisen, welches den Durchgang von Hydraulikflüssigkeit durch den mindestens einen Kanal zu dem hinteren Hydraulikkammerbereich selbsttätig sperrt. Beim Herausfahren des Kolbens aus dem Dämpfungssystem kann über diesen mindestens einen Kanal die von dem Kolbenkopf aus dem hinteren Hydraulikkammerbereich verdrängte Hydraulikflüssigkeit direkt, d.h. ohne einen Umweg über die zweite Hydraulikkammer, in den vorderen Hydraulikkammerbereich der ersten Hydraulikkammer strömen. Wenn allerdings der Kolben bereits teilweise aus dem Dämpfungssystem herausgefahren ist, wird der Mündungsbereich des mindestens einen Kanals von dem Kolbenkopf blockiert, so dass die aus dem hinteren Hydraulikkammerbereich der ersten Hydraulikkammer verdrängte Hydraulikflüssigkeit nur noch über das zweite Überströmsystem zu dem vorderen Hydraulikkammerbereich der ersten Hydraulikkammer gelangen kann. Demnach ermöglicht diese bevorzugte Weiterbildung der erfindungsgemäßen Lösung auch eine hubabhängige Dämpfung bei einer Zugbelastung des Dämpfungssystems.

In einer bevorzugten Realisierung des ersten Überströmsystems, welches ein Überströmen von Hydraulikflüssigkeit aus dem vorderen Hydraulikkammerbereich der ersten Hydraulikkammer zu dem hinteren Hydraulikkammerbereich der ersten Hydraulikkammer bzw. zu der zweiten Hydraulikkammer ermöglicht, ist vorgesehen, dass zumindest bereichsweise zwischen der ersten Hydraulikkammer und dem Gehäuse des Dämpfungssystems ein Spalt ausgebildet ist, wobei der Eingang des mindestens einen Multiplikatorventils über den Spalt mit der ersten Hydraulikkammer verbunden ist. Wenn - wie zuvor ausgeführt - ein Kanalsystem mit einer Vielzahl von Kanälen vorgesehen ist, welche die erste Hydraulikkammer mit dem Eingang des Multiplikatorventils verbinden, ist es von Vorteil, wenn die einzelnen Kanäle des Kanalsystems eine Verbindung zwischen der ersten Hydraulikkammer und dem Spalt bilden. Insbesondere ist es somit denkbar, die Kanäle des Kanalsystems als Radialbohrungen in der Wandung bzw. dem Gehäuse der ersten Hydraulikkammer auszubilden.

In einer bevorzugten Realisierung der erfindungsgemäßen Vorrichtung ist im Hinblick auf das zweite Überströmsystem vorgesehen, dass das zwischen der zweiten Hydraulikkammer und dem vorderen Hydraulikkammerbereich vorgesehene Kugelrückschlagventil in einem Kanal angeordnet ist, welcher den vorderen Hydraulikkammerbereich mit dem zumindest bereichsweise zwischen der ersten Hydraulikkammer und dem Gehäuse des Dämpfungssystems ausgebildeten Spalt verbindet, wobei das Kugelrückschlagventil ausgebildet ist, einen Durchgang von Hydraulikflüssigkeit von dem Spalt zu der zweiten Hydraulikkammer selbsttätig zu sperren. Hierbei handelt es sich um eine besonders leicht zu realisierende Lösung des ersten Überströmsystems.

In einer bevorzugten Realisierung der erfindungsgemäßen Lösung ist mindestens ein Kanal vorgesehen, welcher den hinteren Hydraulikkammerbereich der ersten Hydraulikkammer mit der zweiten Hydraulikkammer verbindet und einen Durchgang von Hydraulikflüssigkeit sowohl von dem hinteren Hydraulikkammerbereich der ersten Hydraulikkammer zu der zweiten Hydraulikkammer als auch von der zweiten Hydraulikkammer zu dem hinteren Hydraulikkammerbereich ermöglicht. Dieser den hinteren Hydraulikkammerbereich der ersten Hydraulikkammer mit der zweiten Hydraulikkammer verbindende Kanal gehört somit sowohl zu dem ersten Überströmsystem, welches ein gedrosseltes Überströmen von Hydraulikflüssigkeit von dem vorderen Hydraulikkammerbereich der ersten Hydraulikkammer zu der zweiten Hydraulikkammer ermöglicht, als auch zu dem zweiten Überströmsystem, welches das gedrosselte Überströmen von Hydraulikflüssigkeit von dem hinteren Hydraulikkammerbereich der ersten Hydraulikkammer über die zweite Hydraulikkammer in den vorderen Hydraulikkammerbereich der ersten Hydraulikkammer ermöglicht.

Im Hinblick auf das erste Überströmsystem, in welchem das mindestens eine Multiplikatorventil vorgesehen ist, ist in einer bevorzugten Realisierung der erfindungsgemäßen Lösung vorgesehen, dass der Ausgang des mindestens einen Multiplikatorventils in einer Ventilkammer mündet, welche über ein Kugelrückschlagventil mit dem hinteren Hydraulikkammerbereich der ersten Hydraulikkammer verbunden ist, wobei das Kugelrückschlagventil den Durchgang von Hydraulikflüssigkeit von dem hinteren Hydraulikkammerbereich zu der Ventilkammer selbsttätig sperrt. Bevorzugt ist dabei mindestens ein Kanal vorgesehen, welcher die Ventilkammer mit der zweiten Hydraulikkammer verbindet, wobei im vollständig geöffneten Zustand des Multiplikatorventils der Steuerkolben des Multiplikatorventils den mindestens einen Kanal sperrt.

Mit dieser Weiterbildung wird erreicht, dass sich das Dämpfungssystem je nach Belastungsart unterschiedlich verhält. Bei einer quasistatischen Beanspruchung des Dämpfungssystems, d.h. wenn sich der Kolben relativ langsam in die erste Hydraulikkammer hineinbewegt, was beim Abdämpfen von moderaten Druckkräften, beispielsweise beim Abdämpfen von im normalen Rangierbetrieb auftretenden Druckkräften der Fall ist, kann die aus dem vorderen Hydraulikkammerbereich der ersten Hydraulikkammer verdrängte Hydraulikflüssigkeit direkt von dem vorderen Hydraulikkammerbereich der ersten Hydraulikkammer in die zweite Hydraulikkammer strömen.

Bei einer dynamischen Beanspruchung des Dämpfungssystems hingegen, wenn also der Kolben auf Grund einer im Crashfall auftretenden Druckbelastung relativ schnell in das Dämpfungssystem eingefahren wird, wird die direkte Verbindung zwischen dem vorderen Hydraulikkammerbereich der ersten Hydraulikkammer und der zweiten Hydraulikkammer gesperrt, da in diesem Fall das Multiplikatorventil in seinem vollständig geöffneten Zustand vorliegt und der Steuerkolben des Multiplikatorventils den mindestens einen Kanal sperrt, welcher die Ventilkammer des Multiplikatorventils mit der zweiten Hydraulikkammer verbindet. Bei einer dynamischen Druckbeanspruchung des Dämpfungssystems wird somit die von dem Kolbenkopf aus dem vorderen Hydraulikkammerbereich verdrängte Hydraulikflüssigkeit zunächst in den hinteren Hydraulikkammerbereich der ersten Hydraulikkammer geleitet. Dann kann die verdrängte Hydraulikflüssigkeit über einen den hinteren Hydraulikkammerbereich der ersten Hydraulikkammer mit der zweiten Hydraulikkammer verbindenden Kanal in die zweite Hydraulikkammer strömen.

Um zu erreichen, dass der Federapparat des Dämpfungssystems bei einer Zugbeanspruchung einen Dämpfungsbeitrag leistet, ist in einer bevorzugten Weiterbildung der erfindungsgemäßen Lösung vorgesehen, dass die erste Hydraulikkammer in dem Gehäuse des Dämpfungssystems relativ zu dem Gehäuse in Richtung des Federapparates verschiebbar aufgenommen ist. Bei einer Längsverschiebung der ersten Hydraulikkammer in Richtung des Federapparates, was bei einer Zugbeanspruchung der Fall ist, bildet sich dabei zwischen dem Gehäuse des Federapparates und der dem Federapparat abgewandten Stirnseite der ersten Hydraulikkammer ein Unterdruck. Dadurch, dass die erste Hydraulikkammer in dem Gehäuse des Dämpfungssystems relativ zu dem Gehäuse in Richtung des Federapparates verschiebbar aufgenommen ist, wird erreicht, dass bei einer Zugbeanspruchung des Dämpfungssystems der Druck in der zweiten Hydraulikkammer erhöht wird, infolgedessen der zweite Anschlag in Richtung des ersten Anschlages bewegt und somit der Federapparat komprimiert wird. Demnach dient auch bei einer Zugbeanspruchung der Federapparat zum Abdämpfen der auftretenden Kräfte. Dadurch, dass der Federapparat - unabhängig davon, ob Zug- oder Druckkräfte in das Dämpfungssystem eingeleitet werden - grundsätzlich nur auf Druck beansprucht wird, ist ein verschließarmer Betrieb beim Abdämpfen von Zug- und Druckkräften möglich.

Der Unterdruck, welcher ausgebildet wird, wenn aufgrund einer einwirkenden Zugbelastung die erste Hydraulikkammer relativ zu dem Gehäuse des Dämpfungssystems in Richtung des Federapparates verschoben wird - wirkt der Längsverschiebung der ersten Hydraulikkammer in Richtung des Federapparates entgegen, was die Rückstellung der ersten Hydraulikkammer die in ihren Ausgangszustand (neutrale Position) unterstützt, wenn die Zugbelastung nicht mehr gegeben ist.

In einer bevorzugten Weiterbildung der zuletzt genannten Ausführungsform, bei welcher die erste Hydraulikkammer in dem Gehäuse des Dämpfungssystems relativ zu dem Gehäuse des Dämpfungssystems in Richtung des Federapparates verschiebbar aufgenommen ist, ist vorgesehen, dass die Wegstrecke, um welche sich die erste Hydraulikkammer relativ zu dem Gehäuse des Dämpfungssystems in Längsrichtung bewegen kann, jener Wegstrecke entspricht, um welche der Federapparat komprimiert wird, wenn sich der Kolbenkopf von seiner hinteren Position, in welcher der Kolbenkopf relativ zu der ersten Hydraulikkammer maximal in Richtung des hinteren Hydraulikkammerbereiches verschoben ist, zu seiner vorderen Position verschiebt, in welcher der Kolbenkopf relativ zu der ersten Hydraulikkammer maximal in Richtung des vorderen Hydraulikkammerbereiches verschoben ist. Mit dieser bevorzugten Weiterbildung der erfindungsgemäßen Lösung wird eine Dämpfungsvorrichtung bereitgestellt, welche trotz optimaler Zug- und Druckkraft-Dämpfungseigenschaften eine besonders kurze Bauform aufweist.

In einer bevorzugten Weiterbildung der zuletzt genannten Ausführungsform ist vorgesehen, dass der Federapparat in einem unkomprimierten Zustand vorliegt, wenn der Kolbenkopf in seiner vorderen Position vorliegt und die erste Hydraulikkammer nicht in der Längsrichtung relativ zu dem Gehäuse des Dämpfungssystems verschoben ist. Bei dieser bevorzugten Ausführungsform liegt somit die Mittenstellung des Kolbens dann vor, wenn der Federapparat in seinem unkomprimierten Zustand vorliegt, d.h. wenn der Kolbenkopf in seiner vorderen Position vorliegt und die erste Hydraulikkammer nicht in der Längsrichtung relativ zu dem Gehäuse des Dämpfungssystems verschoben ist. Dann wird bei Zug- bzw. Druckbeanspruchung des Dämpfungssystems der Kolben um diese Mittenstellung aus dem Dämpfungssystem heraus- bzw. in das Dämpfungssystem hinein verschoben.

In einer bevorzugten Realisierung der erfindungsgemäßen Vorrichtung zum Abdämpfen von Zug- und Druckkräften ist vorgesehen, dass der dem Kolbenkopf gegenüberliegende Endbereich der Kolbenstange mit einem napfartigen Außengehäuse verbunden ist, wobei das Gehäuse des Dämpfungssystems zumindest teilweise teleskopartig in dem Außengehäuse relativ zu dem Außengehäuse in Längsrichtung verschieblich aufgenommen ist. Durch das Vorsehen eines solchen Außengehäuses ist es möglich, das in dem Gehäuse des Dämpfungssystems gekapselt aufgenommene Dämpfungssystem zusätzlich zu schützen. Das Außengehäuse sollte dabei vorzugsweise mit dem Gehäuse des Dämpfungssystems derart zusammenwirken, dass bei einer Verschiebung der Kolbenstange in Längsrichtung relativ zu dem Gehäuse des Dämpfungssystems diese Längsverschiebung von dem Außengehäuse geführt wird.

In einer bevorzugten Weiterbildung der zuletzt genannten Ausführungsform, bei welcher ein mit der Kolbenstange verbundenes Außengehäuse vorgesehen ist, entspricht die Wegstrecke, um welche das Gehäuse des Dämpfungssystems relativ zu dem Außengehäuse verschiebbar ist, dem Kolbenhub, den der Kolbenkopf zwischen einer vorderen Position, in welcher der Kolbenkopf relativ zu der ersten Hydraulikkammer maximal in Richtung des vorderen Hydraulikkammerbereiches verschoben ist, und einer hinteren Position zurücklegt, in welcher der Kolbenkopf relativ zu der ersten Hydraulikkammer maximal in Richtung des hinteren Hydraulikkammerbereiches verschoben ist. Diese Ausführungsform gewährleistet die Realisierung einer Vorrichtung sowohl zum Abdämpfen von Zug- als auch von Druckkräften, wobei insbesondere die Baulänge der Vorrichtung reduziert ist.

Um zu erreichen, dass sich die Kolbenstange relativ zu dem Gehäuse des Dämpfungssystems möglichst ungehindert bewegen kann, ist es bevorzugt, wenn entsprechende Führungsflächen vorgesehen sind, welche die Bewegung der Kolbenstange relativ zu dem Gehäuse des Dämpfungssystems führen. Beispielsweise ist es denkbar, dass bei der zuletzt genannten Weiterbildung das Außengehäuse über entsprechende Führungsflächen mit dem Gehäuse des Dämpfungssystems zusammenwirkt, um eine geführte Bewegung des Gehäuses des Dämpfungssystems relativ zu dem Außengehäuse zu ermöglichen.

Grundsätzlich ist es bevorzugt, wenn der Federapparat mindestens eine Feder, insbesondere eine Schrauben-, Teller-, Ring-, Kautschuk- oder Elastomerfeder, aufweist, welche in den Raum zwischen dem ersten Anschlag und dem zweiten Anschlag gekapselt aufgenommen ist.

Schließlich ist in einer besonders bevorzugten Ausführungsform der erfindungsgemäßen Lösung vorgesehen, dass die hydraulische Dämpfungseinrichtung ein Überlastventil aufweist, welches zu dem mindestens einen Multiplikatorventil parallel geschaltet ist und den Übergang von Hydraulikflüssigkeit nur von dem vorderen Hydraulikkammerbereich in den hinteren Hydraulikkammerbereich und in die zweite Hydraulikkammer zulässt. In einer denkbaren Realisierung dieses Überlastventils kann dieses mit einer Schraubenfeder, Tellerfeder, Ringfeder, Elastomerfeder oder Kautschukfeder vorgespannt sein und ist dabei derart ausgelegt, dass es bei einem vorgebbaren Druck in seinen geöffneten Zustand übergeht. Dieser vorgebbare Druck hängt von der Federvorspannung einerseits und dem Öffnungsquerschnitt andererseits ab.

Die Vorteile der zuletzt genannten Realisierung der erfindungsgemäßen Lösung, bei welcher also ein Überlastventil parallel zu dem mindestens einem Multiplikatorventil geschaltet ist, liegen auf der Hand. Insbesondere dient das Überlastventil zur Begrenzung des Druckes, der sich maximal in der zweiten Hydraulikkammer einstellen kann. Wenn beispielsweise bei einer quasistatischen Belastung in Druckrichtung über den Federapparat und das Multiplikatorventil höhere Drücke und daraus resultierende Kräfte erzeugt werden, als für den bahntypischen Betrieb notwendig sind, so werden diese durch das Überlastventil begrenzt. Daher muss das Gehäuse und die mit diesem Gehäuse korrespondierenden Dichtungen nicht auf diese hohen Drücke ausgelegt werden, sondern lediglich auf den mit dem Überlastventil voreingestellten Druck.

Ein weiterer Vorteil ist in der Begrenzung der dynamischen Kräfte bei einer Druckbelastung zu sehen. Werden über den Federapparat und das Multiplikatorventil bei quasistatischer Belastung in Druckrichtung höhere Drücke und daraus resultierende Kräfte erzeugt, als für den bahntypischen Betrieb notwendig sind, kann es vorkommen, dass die Minimierung der dynamischen Kräfte nicht möglich ist, da bereits die quasistatischen Kräfte als Funktion des Federapparates und des Multiplikatorventils höher sind, als die spezifizierte dynamische Maximalkraft. Begrenzt das Überlastventil jedoch den Druck und damit die Kraft auf einen Wert, der niedriger ist als die spezifizierte dynamische Maximalkraft, ist eine Auslegung des Querschnittes der Blende auf eine Weise möglich, die die Einhaltung der spezifizierten dynamischen Maximalkraft ermöglich.

Im Folgenden wird eine Ausführungsform der erfindungsgemäßen Vorrichtung zum Abdämpfen von Zug- und Druckkräften unter Bezugnahme auf die beigefügten Zeichnungen beschrieben.

Es zeigen:
- Fig. 1: eine schematische Längsschnittansicht einer Ausführungsform der erfindungsgemäßen Vorrichtung zum Abdämpfen von Zug- und Druck- kräften im unbelasteten Zustand;
- Fig. 2: eine schematische Längsschnittansicht der Ausführungsform der erfin- dungsgemäßen Vorrichtung zum Abdämpfen von Zug- und Druckkräften bei Zugbelastung;
- Fig. 3: eine schematische Längsschnittansicht der Ausführungsform der erfin- dungsgemäßen Vorrichtung zum Abdämpfen von Zug- und Druckkräften bei Druckbelastung;
- Fig. 4: einen Ausschnitt aus Fig. 3 zum Verdeutlichen der Funktionsweise des in der Vorrichtung zum Einsatz kommenden mindestens einen Multiplika- torventils;
- Fig. 5a: einen Ausschnitt aus einer schematischen Längsschnittansicht der Ausführungsform der erfindungsgemäßen Vorrichtung zum Abdämpfen von Zug- und Druckkräften mit zumindest teilweise eingefahrenem Kol- ben zum Verdeutlichen des mit dem in der Vorrichtung zum Einsatz kom- menden Federapparat bewirkten Rückhubs;
- Fig. 5b: einen Ausschnitt aus einer schematischen Längsschnittansicht der Ausführungsform der erfindungsgemäßen Vorrichtung zum Abdämpfen von Zug- und Druckkräften mit einem im Vergleich zur Fig. 5a bereits teilweise zurückgesetzten Kolben; und
- Fig. 6: einen Ausschnitt aus einer schematischen Längsschnittansicht der Ausführungsform der erfindungsgemäßen Vorrichtung zum Abdämpfen von Zug- und Druckkräften bei einer dynamischen Druckbeanspruchung.

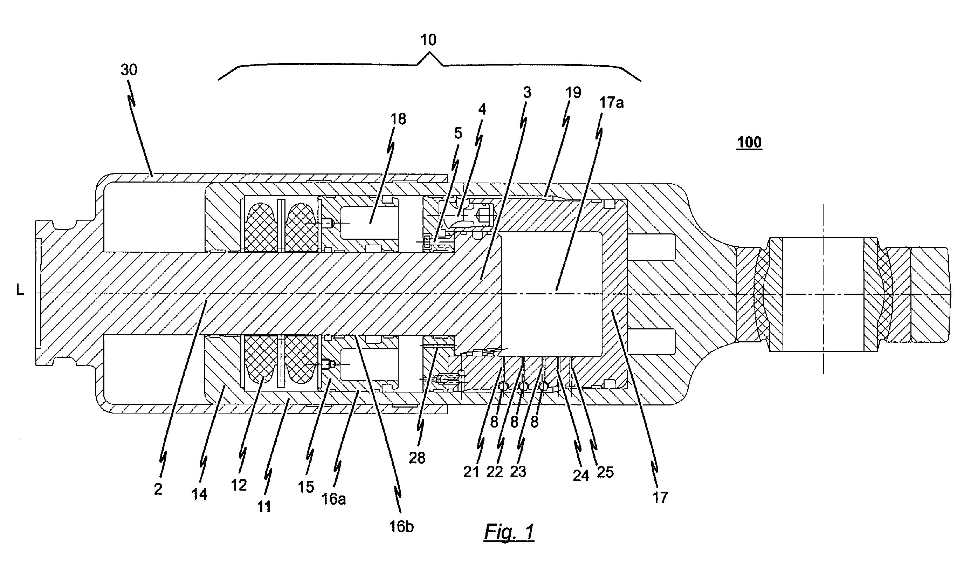

Im Folgenden wird unter Bezugnahme auf die beigefügten Zeichnungen eine mögliche Ausführungsform der erfindungsgemäßen Vorrichtung zum Abdämpfen von Zug- und Druckkräften sowie deren Funktionsweise beschrieben. Dabei zeigt Fig. 1 die Ausführungsform der erfindungsgemäßen Vorrichtung 100 im unbelasteten Zustand, d.h. wenn weder Zug- noch Druckkräfte in die Vorrichtung 100 eingeleitet werden.

Die Vorrichtung 100 weist im Wesentlichen ein in einem Gehäuse 11 aufgenommenes Dämpfungssystem 10 sowie eine relativ zu dem Gehäuse 11 in Längsrichtung L des Dämpfungssystems 10 verschiebbare Kolbenstange 2 auf, über welche in das Dämpfungssystem 10 Zug- oder Druckkräfte einleitbar sind. Das in dem Gehäuse 11 aufgenommene Dämpfungssystem 10 ist eine Kombination aus einem Federapparat 12 und einer hydraulischen Dämpfungseinrichtung 13. Bei der dargestellten Ausführungsform der erfindungsgemäßen Vorrichtung 100 wird der Federapparat 12 durch zwei ringförmige Elastomerfedern begründet, die derart hintereinander angeordnet sind, dass durch die Öffnungen der ringförmigen Elastomerfedern die Kolbenstange 2 hindurch läuft. Die vorliegende Erfindung ist allerdings nicht auf einen Federapparat 12 beschränkt, in welchem ringförmige Elastomerfedern zum Einsatz kommen. Vielmehr können anstelle von oder zusätzlich zu Elastomerfedern auch Schrauben-, Teller- oder Kautschukfedern verwendet werden. Auch ist es grundsätzlich denkbar, für den Federapparat 12 eine Gasfeder einzusetzen.

Auch ist die Erfindung nicht darauf beschränkt, dass sich der Federapparat 12 aus zwei Federelementen zusammensetzt, wie es bei der in den Zeichnungen dargestellten Ausführungsform der Fall ist.

Die beiden ringförmigen Elastomerfederelemente, welche bei der dargestellten Ausführungsform den Federapparat 12 bilden, sind zwischen einem ortsfesten ersten Anschlag 14 und einem relativ zum ersten Anschlag 14 verschiebbaren zweiten Anschlag 15 angeordnet. Bei der dargestellten Ausführungsform ist der ortsfeste erste Anschlag 14 gleichzeitig die Stirnseite des Gehäuses 11 des Dämpfungssystems 10. Der zweite Anschlag 15, welcher relativ zu dem ersten Anschlag 14 und somit relativ zu dem Gehäuse 11 des Dämpfungssystems 10 in Längsrichtung L des Dämpfungssystems 10 verschiebbar ausgebildet ist, ist bei der dargestellten Ausführungsform als Ringkolben ausgeführt, welcher axial mit den beiden Elastomerfederelementen fluchtet, wobei die Kolbenstange 2 durch die Ringöffnung des Ringkolbens verläuft. Der Ringkolben selber weist Führungsflächen 16a, 16b auf, die einerseits mit der Kolbenstange 2 und andererseits mit der Innenwand des Gehäuses 11 des Dämpfungssystems 10 zusammenwirken, um die Relativbewegung des Ringkolbens (zweiter Anschlag 15) relativ zu dem ersten Anschlag 14 zu führen.

Andererseits dichtet der Ringkolben den Bereich, in welchem der Federapparat 12 aufgenommen ist, fluiddicht ab, so dass der Federapparat 12 in einer Federkammer gekapselt aufgenommen ist und insbesondere keine Hydraulikflüssigkeit von der hydraulischen Dämpfungseinrichtung 13 des Dämpfungssystems 10 zu dem Federapparat 12 gelangen kann.

Wie bereits angedeutet, ist bei der dargestellten Ausführungsform der erfindungsgemäßen Vorrichtung 100 vorgesehen, dass das Dämpfungssystem 10 zusätzlich zu dem zuvor beschriebenen Federapparat 12 eine hydraulische Dämpfungseinrichtung 13 aufweist. Im Einzelnen setzt sich bei der dargestellten Ausführungsform die hydraulische Dämpfungseinrichtung 13 im Wesentlichen aus einer ersten Hydraulikkammer 17 und einer zweiten Hydraulikkammer 18 zusammen, wobei beide Hydraulikkammern 17, 18 mit Hydraulikflüssigkeit, wie etwa Hydrauliköl, gefüllt sind. Die erste Hydraulikkammer 17 weist ein eigenes zylinderförmiges Hydraulikkammergehäuse auf, welches in dem Gehäuse 11 des Dämpfungssystems 10 relativ zu diesem verschiebbar aufgenommen ist. Andererseits stellt der Bereich zwischen der Stirnseite des Hydraulikkammergehäuses und der Stirnseite des zweiten Anschlages 15 (Ringkolben) die zweite Hydraulikkammer 18 dar.

Die Kolbenstange 2 läuft durch den Federapparat 12 und die zweite Hydraulikkammer 18 und endet schließlich in der ersten Hydraulikkammer 17. Am Endbereich der Kolbenstange 2 ist ein Kolbenkopf 3 ausgebildet, welcher in der ersten Hydraulikkammer 17 relativ zu dem Gehäuse 11 der ersten Hydraulikkammer 17 verschiebbar aufgenommen ist und bei einer Längsbewegung der Kolbenstange relativ zu der ersten Hydraulikkammer 17 die erste Hydraulikkammer 17 in einen der Kolbenstange 2 abgewandten vorderen Hydraulikkammerbereich 17a und einen der Kolbenstange 2 zugewandten hinteren Hydraulikkammerbereich 17b unterteilt.

Im unbelasteten Zustand des Dämpfungssystems 10, d.h. wenn über die Kolbenstange 2 weder Zug- noch Druckkräfte in das Dämpfungssystem 10 eingeleitet werden, liegt die Kolbenstange 2 in einem Zustand vor, in welchem der Kolbenkopf 3 relativ zu der ersten Hydraulikkammer 17 maximal ausgefahren ist. Wie in Fig. 1 dargestellt, stößt im unbelasteten Zustand des Dämpfungssystems 10 die Rückseite des Kolbenkopfes 3 gegen die Innenwand des Gehäuses der ersten Hydraulikkammer 17 an. Bei einer Längsbewegung des Kolbenkopfes 3 relativ zu dem Gehäuse der ersten Hydraulikkammer 17 wird der sich hinter dem Kolbenkopf 3 ausbildende Bereich der ersten Hydraulikkammer 17 nachfolgend als "hinterer Hydraulikkammerbereich 17b" bezeichnet, während der Bereich der ersten Hydraulikkammer 17 vor dem Kolbenkopf 3 als "vorderer Hydraulikkammerbereich 17a" bezeichnet wird.

Die hydraulische Dämpfungseinrichtung 13 weist ein erstes Überströmsystem auf, über welches bei einer Längsbewegung des Kolbenkopfes 3 relativ zu der ersten Hydraulikkammer 17 in Richtung des vorderen Hydraulikkammerbereiches 17a Hydraulikflüssigkeit von dem vorderen Hydraulikkammerbereich 17a in den hinteren Hydraulikkammerbereich 17b und in die zweite Hydraulikkammer 18 strömen kann.

Zusätzlich zu dem ersten Überströmsystem ist ein zweites Überströmsystem vorgesehen, über welches bei einer Längsbewegung des Kolbenkopfes 3 relativ zu der ersten

Hydraulikkammer 17 in Richtung des hinteren Hydraulikkammerbereiches 17b Hydraulikflüssigkeit von dem hinteren Hydraulikkammerbereich 17b und der zweiten Hydraulikkammer 18 in den vorderen Hydraulikkammerbereich 17a strömen kann. Das Überströmen der Hydraulikflüssigkeit erfolgt jeweils in gedrosselter Weise, so dass die Längsbewegung des Kolbenkopfes 3 relativ zu der ersten Hydraulikkammer 17 abgedämpft wird.

Im Einzelnen wird bei der dargestellten Ausführungsform der erfindungsgemäßen Vorrichtung 100 das erste Überströmsystem durch ein Kanalsystem bestehend aus einer Vielzahl von Kanälen 21, 22, 23, 24, 25 begründet, welche eine Fluidverbindung zwischen der ersten Hydraulikkammer 17 und einem zwischen dem Gehäuse 11 des Dämpfungssystems 10 und dem Gehäuse 11 der ersten Hydraulikkammer 17 ausgebildeten Spaltraum 19 ausbilden. Dieses Kanalsystem ermöglicht es, dass bei einer Längsverschiebung des Kolbenkopfes 3 in den hinteren Hydraulikkammerbereich 17b der ersten Hydraulikkammer 17 Hydraulikflüssigkeit durch zumindest einen Teil der Kanäle 21, 22, 23, 24, 25 zu dem Spaltraum 19 strömen kann.

Andererseits gehört zu dem ersten Überströmsystem noch mindestens ein Multiplikatorventil 4, wobei der zwischen dem Gehäuse 11 des Dämpfungssystems 10 und dem Gehäuse der ersten Hydraulikkammer 17 ausgebildete Spaltraum 19 in den Eingangsbereich des Multiplikatorventils 4 mündet.

Der Ausgangsbereich des Multiplikatorventils 4 ist über mindestens einen Kanal 26 direkt mit der zweiten Hydraulikkammer 18 sowie über mindestens einen weiteren Kanal 27, in welchem ein Kugelrückschlagventil 5 angeordnet ist, mit dem hinteren Hydraulikkammerbereich 17b der ersten Hydraulikkammer 17 verbunden. Das in dem mindestens einen weiteren Kanal 27 angeordnete Kugelrückschlagventil 5 ist ausgelegt, den Durchgang von Hydraulikflüssigkeit von dem hinteren Hydraulikkammerbereich 17b zu der Ventilkammer 6 des Multiplikatorventils 4, in welcher der Ausgang des Multiplikatorventils 4 mündet, selbsttätig zu sperren.

Schließlich ist zu dem ersten Überströmsystem noch mindestens ein weiterer zusätzlicher Kanal 28 zu zählen, welcher den hinteren Hydraulikkammerbereich 17b der ersten Hydraulikkammer 17 direkt mit der zweiten Hydraulikkammer 18 verbindet.

Die zuvor beschriebenen Kanäle 21, 22, 23, 24, 25, 26, 27, 28 des ersten Überströmsystems gestatten es, dass bei einer Längsbewegung des Kolbenkopfes 3 relativ zu der ersten Hydraulikkammer 17 in Richtung des vorderen Hydraulikkammerbereiches 17a Hydraulikflüssigkeit von dem vorderen Hydraulikkammerbereich 17a sowohl in den hinteren Hydraulikkammerbereich 17b als auch in die zweite Hydraulikkammer 18 strömen kann.

Das zweite Überströmsystem, über welches bei einer Längsbewegung des Kolbenkopfes 3 relativ zu der ersten Hydraulikkammer 17 in Richtung des hinteren Hydraulikkammerbereiches 17b Hydraulikflüssigkeit von dem hinteren Hydraulikkammerbereich 17b und der zweiten Hydraulikkammer 18 in den vorderen Hydraulikkammerbereich 17a strömen kann, setzt sich bei der dargestellten Ausführungsform einerseits aus dem mindestens einen zusätzlichen Kanal 28, welcher den hinteren Hydraulikkammerbereich 17b der ersten Hydraulikkammer 17 mit der zweiten Hydraulikkammer 18 verbindet, und mindestens einem weiteren Kanal 29 zusammen, der die zweite Hydraulikkammer 18 mit dem zwischen dem Gehäuse der ersten Hydraulikkammer 17 und dem Gehäuse 11 der Dämpfungseinrichtung 13 ausgebildeten Spaltraum 19 verbindet. In diesem mindestens einen weiteren Kanal 29 ist ein Kugelrückschlagventil 7 vorgesehen, welches ausgelegt ist, den Durchgang von Hydraulikflüssigkeit durch den zusätzlichen Kanal zu der zweiten Hydraulikkammer 18 selbsttätig zu sperren.

Auf diese Weise ist es möglich, dass bei einer Längsbewegung des Kolbenkopfes 3 relativ zu der ersten Hydraulikkammer 17 in Richtung des hinteren Hydraulikkammerbereiches 17b Hydraulikflüssigkeit von dem hinteren Hydraulikkammerbereich 17b über den mindestens einen Kanal 28 zu der zweiten Hydraulikkammer 18 und von dort über den mindestens einen weiteren Kanal 29, in welchem das Kugelrückschlagventil 7 vorgesehen ist, in den Spaltraum 19 zwischen dem Gehäuse der ersten Hydraulikkammer 17 und dem Gehäuse 11 des Dämpfungssystems 10 strömen kann. Die in diesen Spaltraum 19 einströmende Hydraulikflüssigkeit gelangt über zwei Kanäle 24, 25 des Kanalsystems in den vorderen Hydraulikkammerbereich 17a der ersten Hydraulikkammer 17.

Bei der dargestellten Ausführungsform der erfindungsgemäßen Vorrichtung 100 ist vorgesehen, dass die Kanäle 21, 22, 23, 24, 25 des Kanalsystems, welche die erste Hydraulikkammer 17 mit dem zwischen dem Gehäuse 11 des Dämpfungssystems 10 und dem Gehäuse 11 der ersten Hydraulikkammer 17 ausgebildeten Spaltraum 19 verbinden, in Längsrichtung L der ersten Hydraulikkammer 17 voneinander beabstandet in die erste Hydraulikkammer 17 münden. Die Anordnung der Kanäle 21, 22, 23, 24, 25 des Kanalsystems ist dabei so gewählt, dass in einem Zustand, wenn der Kolbenkopf 3 relativ zu der ersten Hydraulikkammer 17 maximal in Richtung des vorderen Hydraulikkammerbereiches 17a verschoben ist, mindestens ein Kanal (in der dargestellten Ausführungsform die Kanäle 21, 22) noch in den vorderen Hydraulikkammerbereich 17a mündet, während die übrigen Kanäle 23, 24, 25 in den hinteren Hydraulikkammerbereich 17b münden. Diese Kanäle 23, 24, 25 des Kanalsystems, welche in den hinteren Hydraulikkammerbereich 17b münden, weisen jeweils ein Kugelrückschlagventil 8 auf, um den Durchgang von Hydraulikflüssigkeit von dem Spaltraum 19 durch diese Kanäle 23, 24, 25 zu dem hinteren Hydraulikkammerbereich 17b selbsttätig zu sperren.

Die zuvor beschriebene Anordnung und Auslegung der einzelnen Kanäle 21, 22, 23, 24, 25 des Kanalsystems ermöglicht es, dass bei einer Verschiebung des Kolbenkopfes 3 relativ zu der ersten Hydraulikkammer 17 in Richtung des hinteren Hydraulikkammerbereiches 17b Hydraulikflüssigkeit von dem hinteren Hydraulikkammerbereich 17b einerseits über das zuvor beschriebene zweite Überströmsystem und andererseits über die in dem hinteren Hydraulikkammerbereich 17b mündenden Kanäle 21, 22 des Kanalsystems zu dem zwischen dem Gehäuse 11 des Dämpfungssystems 10 und dem Gehäuse der ersten Hydraulikkammer 17 ausgebildeten Spaltraum 19 strömen kann.

Das Überströmen von Hydraulikflüssigkeit über zumindest einen Teil der Kanäle des Kanalsystems bei einer Längsbewegung des Kolbenkopfes 3 relativ zu der ersten Hydraulikkammer 17 in Richtung des hinteren Hydraulikkammerbereiches 17b ist allerdings nur solange möglich, bis die Mündungsöffnungen der Kanäle des Kanalsystems von dem Kolbenkopf 3 noch nicht abgedeckt sind. Dies ist bevorzugt dann der Fall, wenn der Kolbenkopf 3 bis zur Mitte der ersten Hydraulikkammer 17 in die Hydraulikkammer eingefahren ist. In einem Zustand, wenn der Kolbenkopf 3 noch nicht soweit in die erste Hydraulikkammer 17 eingefahren ist, kann Hydraulikflüssigkeit bei einer Längsbewegung des Kolbenkopfes 3 in Richtung des hinteren Hydraulikkammerbereiches 17b nur noch über das zweite Überströmsystem zu dem vorderen Hydraulikkammerbereich 17a der ersten Hydraulikkammer 17 gelangen.

Andererseits hängt auch die Anzahl der Kanäle des Kanalsystem, über welche Hydraulikflüssigkeit bei einer Längsbewegung des Kolbenkopfes 3 in Richtung des vorderen Hydraulikkammerbereiches 17a von dem vorderen Hydraulikkammerbereich 17a in den Spaltraum 19 strömen kann, von dem Hub der Kolbenstange 2 ab. Je weiter die Kolbenstange 2 in die erste Hydraulikkammer 17 eingefahren ist, desto geringer ist die Anzahl der Kanäle des Kanalsystems, die in den vorderen Hydraulikkammerbereich 17a der ersten Hydraulikkammer 17 münden.

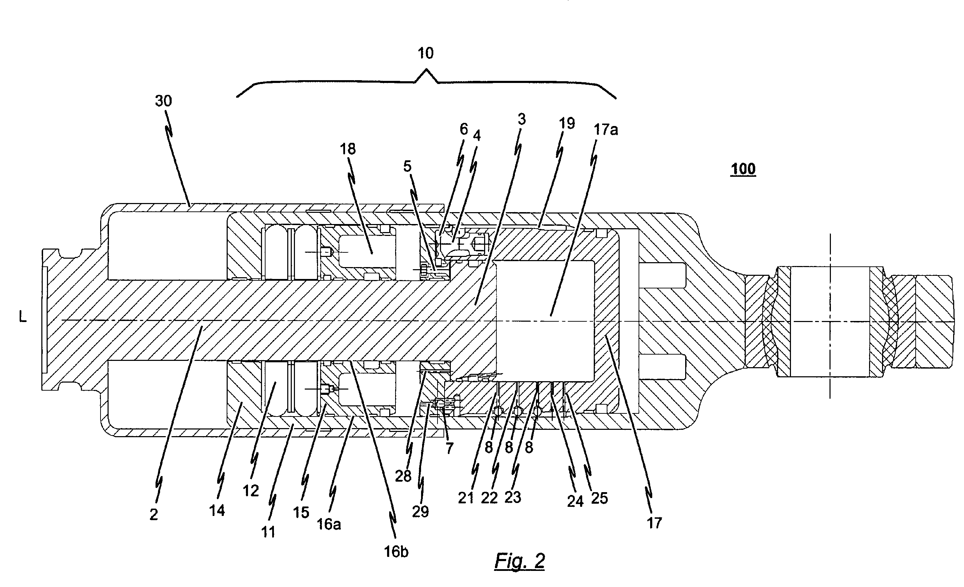

Nachfolgend wird unter Bezugnahme auf die Figuren 2 bis 6 die Funktionsweise der dargestellten Ausführungsform der erfindungsgemäßen Vorrichtung 100 zum Abdämpfen von Zug- und Druckkräften näher beschrieben.

Fig. 2 zeigt in einer schematischen Längsschnittansicht die Ausführungsform der erfindungsgemäßen Vorrichtung 100 bei Zugbeanspruchung. Der Vergleich der Figuren 1 und 2 zeigt unmittelbar, dass bei einer Zugbeanspruchung des Dämpfungssystems 10 das Gehäuse der ersten Hydraulikkammer 17 - im Vergleich zu der in Fig. 1 gezeigten Neutralstellung des Dämpfungssystems 10 - relativ zu dem Gehäuse 11 des Dämpfungssystems 10 in Richtung des Federapparates 12 verschoben ist. Dies ist darauf zurückzuführen, dass bei der in Fig. 1 gezeigten Neutralstellung des Dämpfungssystems 10 (unbelasteter Zustand) die Rückseite des Kolbenkopfes 3 bereits an der federapparatseitigen Fläche des Gehäuses der ersten Hydraulikkammer 17 anliegt. Wird nun - wie in Fig. 2 dargestellt - auf die Kolbenstange 2 eine Zugkraft ausgeübt, wird mit der Kolbenstange 2 das Gehäuse der ersten Hydraulikkammer 17 in Richtung des Federapparates 12 gezogen. Auf der Rückseite des Gehäuses 11 der ersten Hydraulikkammer 17 bildet sich somit ein Unterdruck aus, welches der an das Gehäuse 11 der ersten Hydraulikkammer 17 angreifenden Zugkraft entgegenwirkt.

Da bei einer Zugbelastung des Dämpfungssystems 10 der Kolbenkopf 3 nicht innerhalb der ersten Hydraulikkammer 17 relativ zu dieser verschoben wird, strömt auch keine Hydraulikflüssigkeit von der ersten Hydraulikkammer 17 über das erste Überströmsystem zu der zweiten Hydraulikkammer 18.

Die bei einer Zugbelastung bewirkte Verschiebung des Gehäuses der ersten Hydraulikkammer 17 relativ zu dem Gehäuse 11 des Dämpfungssystems 10 in Richtung Federapparat 12 hat zur Folge, dass der Druck der Hydraulikflüssigkeit in der zweiten Hydraulikkammer 18 im Vergleich zum unbelasteten Zustand (vgl. Fig. 1) erhöht wird. Die Hydraulikflüssigkeit strömt von der zweiten Hydraulikkammer 18 zumindest teilweise über den zum zweiten Überströmsystem gehörenden Kanal 29 und den nicht mit einem Kugelrückschlagventil versehenen Kanälen 24, 25 des Kanalsystems in die erste Hydraulikkammer 17, so dass bei einer quasistatischen Belastung ein Druckausgleich zwischen der ersten und der zweiten Hydraulikkammer 18 einstellt. Andererseits übt die in der zweiten Hydraulikkammer 18 komprimierte Hydraulikflüssigkeit eine Druckkraft auf den in der dargestellten Ausführungsform als Ringkolben ausgebildeten zweiten Anschlag 15 aus und bewirkt, dass sich der zweite Anschlag 15 relativ zu dem Gehäuse 11 des Dämpfungssystems 10 und relativ zu dem ersten Anschlag 14 in Richtung des ersten Anschlages 14 bewegt. Auf diese Weise wird der zwischen dem ersten und dem zweiten Anschlag 14, 15 aufgenommene Federapparat 12 komprimiert. Die Rückstellkraft des Federapparates 12 wirkt dabei der Druckkraft der in der zweiten Hydraulikkammer 18 aufgenommenen Hydraulikflüssigkeit entgegen.

Demnach wird bei einer Zugbelastung des Dämpfungssystems 10 ein Dämpfungseffekt einerseits durch den Aufbau eines Unterdruckes zwischen dem Gehäuse 11 des Dämpfungssystems 10 und der dem Federapparat 12 abgewandten Stirnseite der ersten Hydraulikkammer 17 und andererseits durch die Komprimierung des Federapparates 12 bewirkt. Gleichzeitig wird erreicht, dass nach Beendigung der Zugbelastung das Gehäuse 11 sich der ersten Hydraulikkammer 17 wieder in seinen in Fig. 1 dargestellten Zustand bewegt. Der Unterdruck sowie die Expansionskraft des Federapparates 12 bewirken somit eine Mittenrückstellung des Dämpfungssystems 10 in seinen in Fig. 1 dargestellten unbelasteten Zustand, sobald eine Zugbelastung nicht mehr gegeben ist.

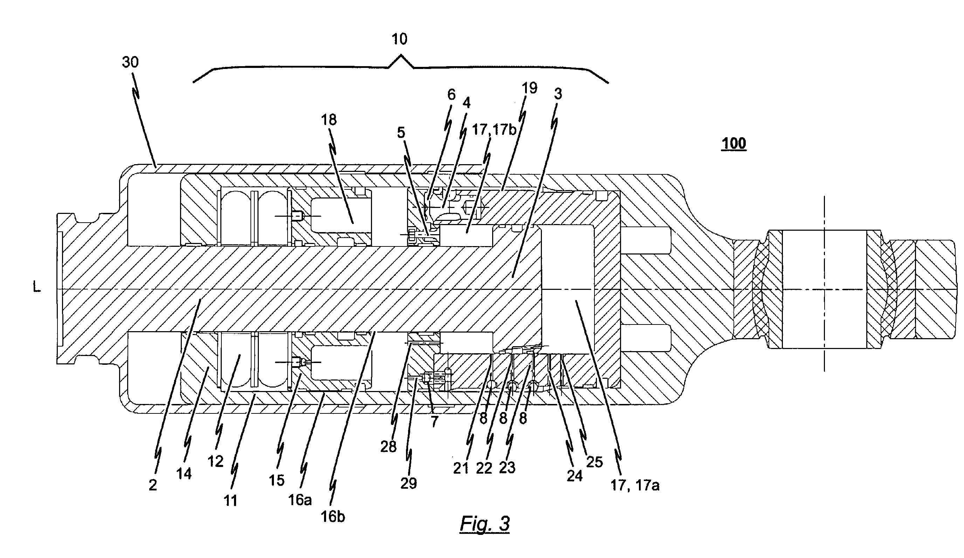

In Fig. 3 ist in einer schematischen Längsschnittansicht die Ausführungsform der erfindungsgemäßen Vorrichtung 100 zum Abdämpfen von Zug- und Druckkräften in einem druckbelasteten Zustand gezeigt. Bei einer Druckbelastung, d.h. wenn Druckkräfte über die Kolbenstange 2 in das Dämpfungssystem 10 eingeleitet werden, verschiebt sich die Kolbenstange 2 mit dem Kolbenkopf 3 relativ zu der ersten Hydraulikkammer 17 in Richtung des vorderen Hydraulikkammerbereiches 17a. Durch dieses Einfahren des Kolbenkopfes 3 in die erste Hydraulikkammer 17 wird die Hydraulikflüssigkeit in der vorderen Hydraulikkammer komprimiert. Dies hat zur Folge, dass Hydraulikflüssigkeit aus dem vorderen Hydraulikkammerbereich 17a über das erste Überströmsystem in den hinteren Hydraulikkammerbereich 17b strömt. Da der hintere Hydraulikkammerbereich über den mindestens einen Kanal 28 in Fluidverbindung mit der zweiten Hydraulikkammer 18 steht, fließt auch zumindest ein Teil der beim Einfahren des Kolbenkopfes 3 in den vorderen Hydraulikkammerbereich 17a verdrängten Flüssigkeit in die zweite Hydraulikkammer 18 und bewirkt dort einen Druckanstieg. Der erhöhte Druck der Hydraulikflüssigkeit in der zweiten Hydraulikkammer 18 wirkt auf den in der dargestellten Ausführungsform als Ringkolben ausgebildeten zweiten Anschlag 15, so dass sich dieser relativ zu dem Gehäuse 11 des Dämpfungssystems 10 in Richtung des ersten Anschlages 14 bewegt und dabei den zwischen dem ersten und dem zweiten Anschlag 15 aufgenommenen Federapparat 12 komprimiert.

Demnach wird bei der Druckbelastung des Dämpfungssystems 10 ein Dämpfungseffekt einerseits durch ein gedrosseltes Überströmen der aus dem vorderen Hydraulikkammerbereich 17a verdrängten Hydraulikflüssigkeit und andererseits durch die Komprimierung des Federapparates 12 bewirkt.

Wie bereits erwähnt, strömt beim Einfahren des Kolbenkopfes 3 in den vorderen Hydraulikkammerbereich 17a die dabei verdrängte Hydraulikflüssigkeit über die Kanäle 21, 22, 23, 24, 25 des Kanalsystems zu dem Spaltraum 19 und von dort über das mindestens eine Multiplikatorventil 4 in den hinteren Hydraulikkammerbereich 17b bzw. in die zweite Hydraulikkammer 18. Bei der dargestellten Ausführungsform der erfindungsgemäßen Vorrichtung 100 sind die Kanäle 21, 22, 23, 24, 25 des Kanalsystems, welche die erste Hydraulikkammer 17 mit dem Spaltraum 19 verbinden, in Längsrichtung L der ersten Hydraulikkammer 17 voneinander beabstandet angeordnet. Dies hat zur Folge, dass der effektive Strömungsquerschnitt des Kanalsystems, d.h. die Anzahl der Kanäle 21, 22, 23, 24, 25, über welche die beim Einfahren des Kolbenkopfes 3 in die erste Hydraulikkammer 17 verdrängte Hydraulikflüssigkeit in den Spaltraum 19 strömen kann, davon abhängt, wie weit der Kolbenkopf 3 relativ zu der ersten Hydraulikkammer 17 in Richtung des vorderen Hydraulikkammerbereiches 17a verschoben ist. Mit anderen Worten, je weiter der Kolbenkopf 3 in die erste Hydraulikkammer 17 eingefahren ist, desto geringer ist die Anzahl der Kanäle des Kanalsystems, über welche die aus dem vorderen Hydraulikkammerbereich 17a verdrängte Hydraulikflüssigkeit in den Spaltraum 19 und von dort über das mindestens eine Multiplikatorventil 4 in den hinteren Hydraulikkammer bzw. die zweite Hydraulikkammer 18 strömen kann. Hierbei ist zu berücksichtigen, dass die erfindungsgemäße Vorrichtung vorzugsweise derart ausgelegt ist, dass bei einem in die Vorrichtung eingeleiteten Stoß die Relativgeschwindigkeit der zusammenstoßenden Körper zueinander abnimmt. Damit reduziert sich auch die Eindruckgeschwindigkeit der Kolbenstange. Da die hydraulischen Kräfte unter anderem von der Eindrückgeschwindigkeit der Kolbenstange und dem effektiven Strömungsquerschnitt abhängen, über den die aus dem vorderen Hydraulikkammerbereich verhängte Hydraulikflüssigkeit zum Eingang des Multiplikatorventils strömen kann, wird der effektive Strömungsquerschnitt mit zunehmendem Hub der Kolbenstange verringert, um die hydraulischen Kräfte weitestgehend konstant zu halten.

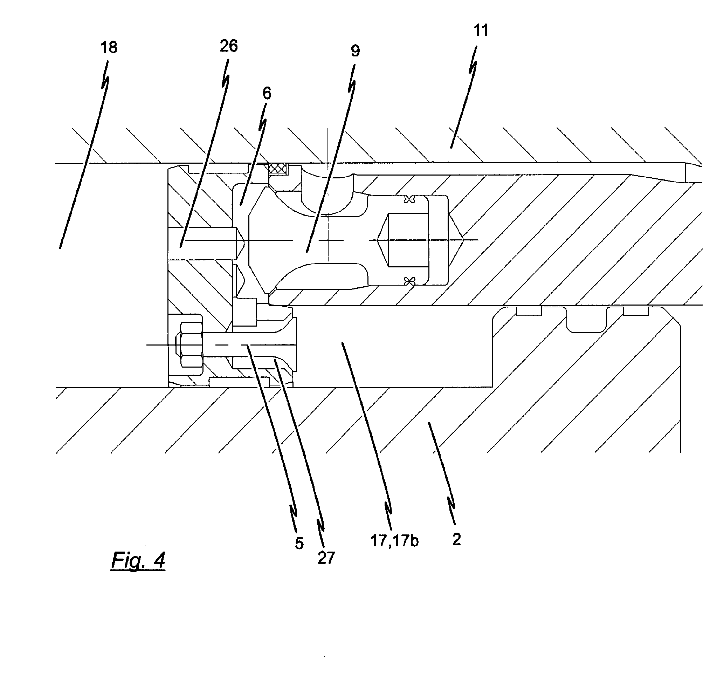

In Fig. 4 ist ein Ausschnitt aus der schematischen Längsschnittansicht gemäß Fig. 3 gezeigt. Im Einzelnen ist in Fig. 4 das Multiplikatorventil 4 dargestellt, wenn das Dämpfungssystem 10 quasistatisch mit Druck belastet wird. Bei einer quasistatischen Druckbelastung fährt der Kolbenkopf 3 - im Vergleich zu einer dynamischen Druckbelastung - relativ langsam in die erste Hydraulikkammer 17 ein, so dass der Druck im vorderen Hydraulikkammerbereich 17a vergleichsweise moderat ansteigt. Der bei der quasistatischen Druckbelastung bewirkte Druckanstieg im vorderen Hydraulikkammerbereich 17a der ersten Hydraulikkammer 17 und somit auch in dem Spaltraum 19 wirkt auf den Steuerkolben 9 des Multiplikatorventils 4, der in Folge dessen relativ zu dem Gehäuse 11 des Dämpfungssystems 10 bzw. relativ zu dem Gehäuse 11 der ersten Hydraulikkammer 17 in Richtung des Federapparates 12 verschoben wird. Gleichzeitig wirkt auf den Steuerkolben 9 des Multiplikatorventils 4 ein Unterdruck, der bei der Verschiebung des Steuerkolbens 9 relativ zu der ersten Hydraulikkammer 17 an der Rückseite des Steuerkolbens 9 gezogen wird. Im Einzelnen ist hinter dem Steuerkolben 9 eine Luftkammer 30 vorgesehen, wobei sich bei der Montage der erfindungsgemäßen Vorrichtung in dieser Luftkammer 30 der atmosphärische Umgebungsdruck einstellt. Bei Betätigung des Steuerkolbens 9 wird das Volumen der Luftkammer 30 vergrößert, so dass sich ein entsprechender Unterdruck ausbildet. Durch das Verschieben des Steuerkolbens 9 in Richtung des Federapparates 12 öffnet sich das Multiplikatorventil 4 zumindest teilweise, so dass die in dem Spaltraum 19 unter hohem Druck vorliegende Hydraulikflüssigkeit über das Multiplikatorventil 4 in die Ventilkammer 6 strömen kann, in welche der Ausgang des Multiplikatorventils 4 mündet. Diese Ventilkammer 6 ist - wie es insbesondere der Fig. 4 entnommen werden kann - einerseits über mindestens einen Kanal 26 direkt mit der zweiten Hydraulikkammer 18 verbunden. Andererseits kann die über das Multiplikatorventil 4 in die Ventilkammer 6 strömende Hydraulikflüssigkeit über das Kugelrückschlagventil 5 in den hinteren Hydraulikkammerbereich 17b der ersten Hydraulikkammer 17 strömen.

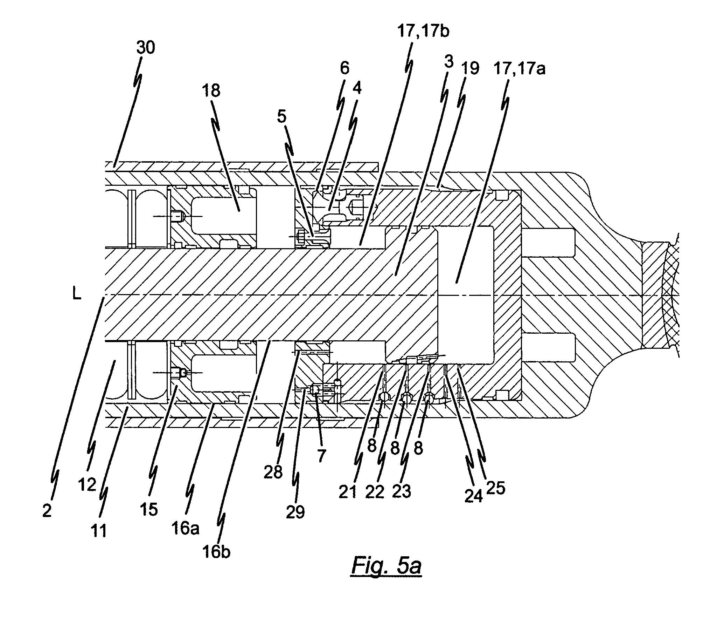

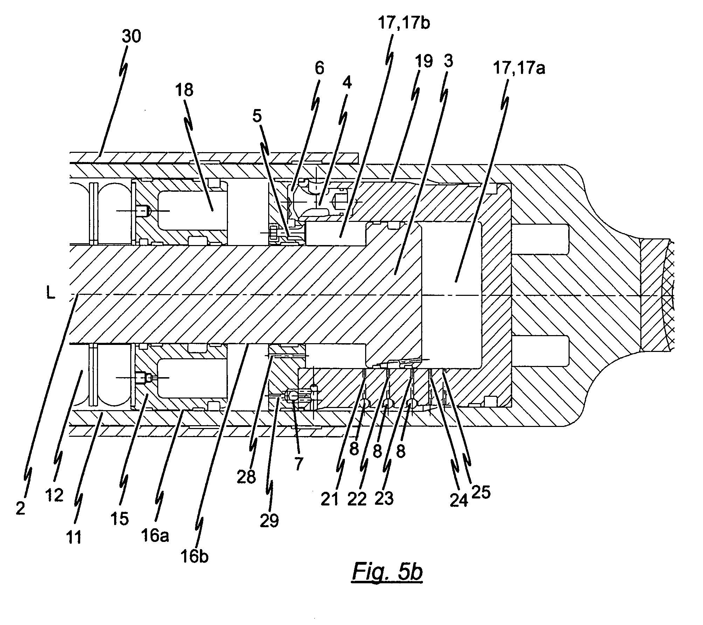

Nachfolgend wird unter Bezugnahme auf die Figuren 5a und 5b beschrieben, wie eine Rückstellung in den in Fig. 1 gezeigten unbelasteten Zustand bewirkt wird, wenn aufgrund einer Druckbelastung der Kolbenkopf 3 in die erste Hydraulikkammer 17 eingefahren wurde und anschließend kein Druck mehr in das Dämpfungssystem 10 eingeleitet wird.

Im druckbelasteten Zustand liegt - wie es zuvor unter Bezugnahme auf die Darstellung in Fig. 3 beschrieben wurde - der Federapparat 12 in einem komprimierten Zustand vor, da der erhöhte Druck in der zweiten Hydraulikkammer 18 den zweiten Anschlag 15 in Richtung des ersten Anschlages 14 verschiebt. Nach Wegfall der Druckbelastung wird Hydraulikflüssigkeit aus der zweiten Hydraulikkammer 18 durch die Expansionskräfte des Federapparates 12 und durch die damit bewirkte Verschiebung des zweiten Anschlages 15 relativ zu dem Gehäuse 11 des Dämpfungssystems 10 von dem ersten Anschlag 14 weg aus der zweiten Hydraulikkammer 18 gedrückt. Dabei strömt die Hydraulikflüssigkeit über das zweite Überströmsystem in den vorderen Hydraulikkammerbereich 17a der ersten Hydraulikkammer 17. Dies hat zur Folge, dass der Kolbenkopf 3 in Richtung der in Fig. 1 gezeigten Neutralstellung verschoben wird. Diese Verschiebung des Kolbenkopfes 3 relativ zu der ersten Hydraulikkammer 17 in Richtung des hinteren Hydraulikkammerbereiches 17b hat zur Folge, dass Hydraulikflüssigkeit aus dem hinteren Hydraulikkammerbereich 17b über den mindestens einen Kanal 28 in die zweite Hydraulikkammer 18 und von dort über das zweite Überströmsystem in den vorderen Hydraulikkammerbereich 17a der ersten Hydraulikkammer 17 strömt.

Andererseits kann die bei der Längsverschiebung des Kolbenkopfes 3 in Richtung des hinteren Hydraulikkammerbereiches 17b aus dem hinteren Hydraulikkammerbereich 17b verdrängte Hydraulikflüssigkeit auch direkt über mindestens einen Kanal 21 des Kanalsystems in den Spaltraum 19 und von dort in den vorderen Hydraulikkammerbereich 17a strömen. Dieser Zustand ist in Fig. 5a dargestellt.

Der mit diesem Kanal 21 des Kanalsystems bereitgestellte Bypass zwischen dem hinteren Hydraulikkammerbereich 17b und dem Spaltraum 19 steht allerdings nur dann zur Verfügung, wenn der Kolbenkopf 3 relativ weit in die erste Hydraulikkammer 17 eingefahren ist. Ein Vergleich der Darstellungen der Figuren 5a und 5b zeigt, dass die Kanäle 21, 22, 23, 24, 25 des Kanalsystems nicht mehr in den hinteren Hydraulikkammerbereich 17b der ersten Hydraulikkammer 17 münden, wenn der Kolbenkopf 3 im Vergleich zu dem in Fig. 5a gezeigten Zustand weiter in Richtung des hinteren Hydraulikkammerbereiches 17b verschoben ist.

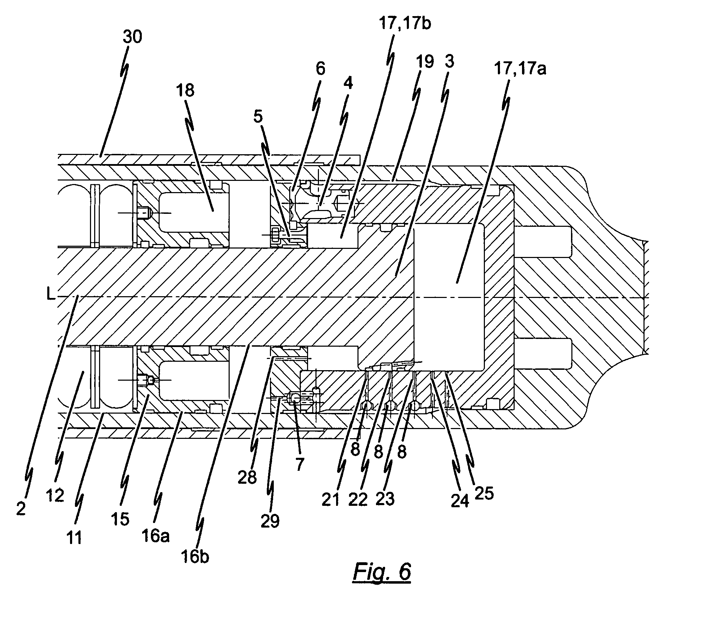

Nachfolgend wird unter Bezugnahme auf die Darstellung in Fig. 6 ein Zustand der Vorrichtung 100 zum Abdämpfen von Zug- und Druckkräften bei einer dynamischen Druckbelastung beschrieben. Im Unterschied zu einer quasistatischen Druckbelastung wird bei einer dynamischen Druckbelastung der Druck in dem vorderen Hydraulikkammerbereich 17a schlagartig aufgebaut. Die dadurch komprimierte Hydraulikflüssigkeit strömt über die Kanäle 21,22,23,24,25 des Kanalsystems in den Spaltraum 19, so dass am Eingang des mindestens einen Multiplikatorventils 4 ebenfalls ein relativ hoher Druck vorliegt. Dies hat zur Folge, dass das Multiplikatorventil 4 vollständig öffnet, so dass die Hydraulikflüssigkeit mit einem vergleichsweise geringen Druckabfalls über das Multiplikatorventil 4 in die Ventilkammer 6 gelangt. Von dort strömt die Hydraulikflüssigkeit über das Kugelrückschlagventil 5 in den hinteren Hydraulikkammerbereich 17b. Da der hintere Hydraulikkammerbereich 17b über den mindestens einen Kanal 28 mit der zweiten Hydraulikkammer 18 verbunden ist, gelangt die Hydraulikflüssigkeit auch in die zweite Hydraulikkammer 18 und führt dort zu einem Druckanstieg, welcher wiederum zu einer Komprimierung des Federapparates 12 führt.

Der mindestens eine Kanal 26, welcher die Ventilkammer 6 direkt mit der zweiten Hydraulikkammer 18 verbindet, wird im vollständig geöffneten Zustand des Multiplikatorventils 4 (vgl. Fig. 6) von dem Steuerkolben 9 des Multiplikatorventils 4 gesperrt, so dass die Hydraulikflüssigkeit nicht direkt aus der Ventilkammer 6 in die zweite Hydraulikkammer 18 gelangen kann.

Bei der dargestellten Ausführungsform der erfindungsgemäßen Vorrichtung 100 ist die Kolbenstange 2 mit ihrem dem Kolbenkopf 3 gegenüberliegenden Endbereich mit einem napfartigen Außengehäuse 30 verbunden, wobei das Gehäuse 11 des Dämpfungssystems 10 zumindest teilweise teleskopartig in dem Außengehäuse 30 relativ zu dem Außengehäuse 30 in Längsrichtung L verschieblich aufgenommen ist. Das Außengehäuse 30 und das Gehäuse 11 des Dämpfungssystems 10 weisen Führungsflächen auf, um die Bewegung der Kolbenstange 2 relativ zu dem Gehäuse 11 des Dämpfungssystems 10 entsprechend zu führen.

Um eine besonders geringe Baulänge zu erreichen, ist bei der dargestellten Ausführungsform vorgesehen, dass die Wegstrecke, um welche das Gehäuse 11 des Dämpfungssystems 10 relativ zu dem Außengehäuse 30 verschiebbar ist, dem Kolbenhub entspricht, den der Kolbenkopf 3 zwischen einer vorderen Position, in welcher der Kolbenkopf 3 relativ zu der ersten Hydraulikkammer 17 maximal in Richtung des vorderen Hydraulikkammerbereiches 17a verschoben ist, und einer hinteren Position zurücklegt, in welcher der Kolbenkopf 3 relativ zu der ersten Hydraulkkammer maximal in Richtung des hinteren Hydraulikkammerbereiches 17b verschoben ist.

Andererseits entspricht die Wegstrecke, um welche sich die erste Hydraulikkammer 17 relativ zu dem Gehäuse 11 des Dämpfungssystems 10 in Längsrichtung L bewegen kann, der Wegstrecke, um welche der Federapparat 12 komprimiert wird, wenn sich der Kolbenkopf 3 von seiner hinteren Position, in welcher der Kolbenkopf 3 relativ zu der ersten Hydraulikkammer 17 maximal in Richtung des hinteren Hydraulikkammerbereiches 17b verschoben ist, zu seiner vorderen Position verschiebt, in welcher Kolbenkopf 3 relativ zu der ersten Hydraulikkammer 17 maximal in Richtung des vorderen Hydraulikkammerbereiches 17a verschoben ist.

Die Erfindung ist nicht auf die unter Bezugnahme der beigefügten Zeichnungen beschriebene Ausführungsform der Vorrichtung 100 zum Abdämpfen von Zug- und Druckkräften beschränkt. Vielmehr sind entsprechende Modifikationen denkbar.

Die erfindungsgemäße Vorrichtung 100 eignet sich insbesondere zur Verwendung als regeneratives Dämpfungssystem 10 in einer Kupplungsstange einer Mittelpufferkupplung. Denkbar hierbei ist es beispielsweise, dass das Gehäuse 11 des Dämpfungssystems 10 verschwenkbar an der Stirnseite eines Wagenkastens eines Schienenfahrzeuges angelenkt wird, während an dem Außengehäuse 30 bzw. der Kolbenstange 2 der Kupplungskopf direkt oder über eine Kupplungsstange indirekt befestigt ist. Bei dieser Ausführungsform werden die auf den Kupplungskopf einwirkenden Zug- und Druckkräfte in das Dämpfungssystem 10 eingeleitet und dort zumindest teilweise abgedämpft.

Obwohl in den Zeichnungen nicht dargestellt, ist es grundsätzlich denkbar, dass ein Überlastventil zu dem Steuerkolben 9 des Multiplikatorventils 4 parallel geschaltet wird, wobei dieses Überlastventil einen Durchgang der Hydraulikflüssigkeit von dem vorderen Hydraulikkammerbereich 17a in den hinteren Hydraulikkammerbereich 17b und in die hintere Hydraulikkammer 18 sperrt.

### Bezugszeichenliste

- 2: Kolbenstange
- 3: Kolbenkopf
- 4: Multiplikatorventil
- 5: Rückstoßventil
- 6: Ventilkammer
- 7: Rückstoßventil
- 8: Rückstoßventil
- 9: Steuerkolben des Multiplikatorventils
- 10: Dämpfungssystem
- 11: Gehäuse des Dämpfungssystems
- 12: Federapparat
- 14: erster Anschlag
- 15: zweiter Anschlag/Ringkolben
- 16a, b: Führungsflächen
- 17: erste Hydraulikkammer
- 17a: vorderer Hydraulikkammerbereich der ersten Hydraulikkammer
- 17b: hinterer Hydraulikkammerbereich der ersten Hydraulikkammer
- 18: zweite Hydraulikkammer
- 19: Spaltraum zwischen dem Gehäuse 11 und der ersten Hydraulikkammer 17
- 21 bis 28: Kanäle des ersten Überströmsystems
- 29: weiterer Kanal
- 30: Außengehäuse
- 100: Vorrichtung zum Abdämpfen von Zug- und Druckkräften

## Patentansprüche

1. Vorrichtung (100) zum Abdämpfen von Zug- und Druckkräften, wobei die Vorrichtung (100) folgendes aufweist:
- ein in einem Gehäuse (11) aufgenommenes Dämpfungssystem (10) mit einem Federapparat (12) und einer hydraulischen Dämpfungseinrichtung (13), wobei der Federapparat (12) zwischen einem relativ zu dem Gehäuse (11) ortsfesten ersten Anschlag (14) und einem relativ zu dem ersten Anschlag (14) verschiebbaren zweiten Anschlag (15) angeordnet ist, und wobei die hydraulische Dämpfungseinrichtung (13) eine mit Hydraulikflüssigkeit gefüllte erste Hydraulikkammer (17) und eine mit Hydraulikflüssigkeit gefüllte zweite Hydraulikkammer (18) aufweist, welche zwischen der ersten Hydraulikkammer (17) und dem zweiten Anschlag (15) ausgebildet ist; und
- eine relativ zu dem Gehäuse (11) in Längsrichtung (L) verschiebbare Kolbenstange (2) mit einem an einem Endbereich ausgebildeten Kolbenkopf (3), welcher in der ersten Hydraulikkammer (17) relativ zu der ersten Hydraulikkammer (17) verschiebbar aufgenommen ist und bei einer Längsverschiebung relativ zu der ersten Hydraulikkammer (17) die erste Hydraulikkammer (17) in einen der Kolbenstange (2) abgewandten vorderen Hydraulikkammerbereich (17a) und einen der Kolbenstange (2) zugewandten hinteren Hydraulikkammerbereich (17b) unterteilt, **dadurch gekennzeichnet dass** die hydraulische Dämpfungseinrichtung (13) ein erstes Überströmsystem aufweist, über welches bei einer Längsbewegung des Kolbenkopfes (3) relativ zu der ersten Hydraulikkammer (17) in Richtung des vorderen Hydraulikkammerbereiches (17a) Hydraulikflüssigkeit von dem vorderen Hydraulikkammerbereich (17a) über mindestens ein Multiplikatorventil (4) in den hinteren Hydraulikkammerbereich (17b) und in die zweite Hydraulikkammer (18) strömen kann, und
dass die hydraulische Dämpfungseinrichtung (13) ein zweites Überströmsystem aufweist, über welches bei einer Längsbewegung des Kolbenkopfes (3) relativ zu der ersten Hydraulikkammer (17) in Richtung des hinteren Hydraulikkammerbereiches (17b) Hydraulikflüssigkeit von dem hinteren Hydraulikkammerbereich (17b) und der zweiten Hydraulikkammer (18) über ein Kugelrückschlagventil (7) in den vorderen Hydraulikkammerbereich (17a) strömen kann.

2. Vorrichtung (100) nach Anspruch 1,
wobei ein Kanalsystem vorgesehen ist, welches die erste Hydraulikkammer (17) mit dem Eingang des Multiplikatorventils (4) verbindet, wobei der effektive Strömungsquerschnitt des Kanalsystems davon abhängt, wie weit der Kolbenkopf (3) relativ zu der ersten Hydraulikkammer (17) in Richtung des vorderen Hydraulikkammerbereiches (17a) verschoben ist.

3. Vorrichtung (100) nach Anspruch 2,
wobei das Kanalsystem eine Vielzahl von Kanäle (21, 22, 23, 24, 25) aufweist, welche die erste Hydraulikkammer (17) mit dem Eingang des Multiplikatorventils (4) verbinden, wobei die Kanäle (21, 22, 23, 24, 25) in Längsrichtung (L) der ersten Hydraulikkammer (17) voneinander beabstandet in der ersten Hydraulikkammer (17) münden.

4. Vorrichtung (100) nach Anspruch 2 oder 3,
wobei - wenn der Kolbenkopf (3) relativ zu der ersten Hydraulikkammer (17) maximal in Richtung des vorderen Hydraulikkammerbereiches (17a) verschoben ist - das Kanalsystem mindestens einen Kanal (21, 22, 23) aufweist, welcher in den hinteren Hydraulikkammerbereich (17b) mündet, und mindestens einen Kanal (24, 25) aufweist, welcher in den vorderen Hydraulikkammerbereich (17a) mündet.

5. Vorrichtung (100) nach Anspruch 4,
wobei der mindestens eine Kanal (21, 22, 23) des Kanalsystems, welcher - wenn der Kolbenkopf (3) maximal in Richtung des vorderen Hydraulikkammerbereiches (17a) verschoben ist - in den hinteren Hydraulikkammerbereich (17b) mündet, ein Kugelrückschlagventil (8) aufweist, welches den Durchgang von Hydraulikflüssigkeit durch den mindestens einen Kanal (21, 22, 23) zu dem hinteren Hydraulikkammerbereich (17b) selbsttätig sperrt.

6. Vorrichtung (100) nach einem der vorhergehenden Ansprüchen, insbesondere nach einem der Ansprüche 3 bis 5,
wobei zumindest bereichsweise zwischen der ersten Hydraulikkammer (17) und dem Gehäuse (11) des Dämpfungssystems (10) ein Spaltraum (19) ausgebildet ist, wobei der Eingang des Multiplikatorventils (4) über den Spaltraum (19) mit der ersten Hydraulikkammer (17) verbunden ist.

7. Vorrichtung (100) nach einem der vorhergehenden Ansprüche, insbesondere Anspruch 6,
wobei das zwischen der zweiten Hydraulikkammer (18) und dem vorderen Hydraulikkammerbereich (17a) vorgesehene Kugelrückschlagventil (7) in einem Kanal (29) angeordnet ist, welcher den vorderen Hydraulikkammerbereich (17a) mit dem zumindest bereichsweise zwischen der ersten Hydraulikkammer (17) und dem Gehäuse (11) des Dämpfungssystems (10) ausgebildeten Spaltraum (19) verbindet, und wobei das Kugelrückschlagventil (7) ausgebildet ist, einen Durchgang von Hydraulikflüssigkeit von dem Spaltraum (19) zu der zweiten Hydraulikkammer (18) selbsttätig zu sperren.

8. Vorrichtung (100) nach einem der vorhergehenden Ansprüche,
wobei mindestens ein Kanal (28) vorgesehen ist, welcher den hinteren Hydraulikkammerbereich (17b) mit der zweiten Hydraulikkammer (18) verbindet und einen Durchgang von Hydraulikflüssigkeit von dem hinteren Hydraulikkammerbereich (17b) zu der zweiten Hydraulikkammer (18) und umgekehrt ermöglicht.

9. Vorrichtung (100) nach einem der vorhergehenden Ansprüche,
wobei der Ausgang des Multiplikatorventils (4) in einer Ventilkammer (6) mündet, welche über ein Kugelrückschlagventil (5) mit dem hinteren Hydraulikkammerbereich (17b) verbunden ist, wobei das Kugelrückschlagventil (5) den Durchgang von Hydraulikflüssigkeit von dem hinteren Hydraulikkammerbereich (17b) zu der Ventilkammer (6) selbsttätig sperrt.

10. Vorrichtung (100) nach Anspruch 9,
wobei mindestens ein Kanal (26) vorgesehen ist, welcher die Ventilkammer (6) mit der zweiten Hydraulikkammer (18) direkt verbindet, wobei im vollständig geöffneten Zustand des Multiplikatorventils (4) der Steuerkolben (9) des Multiplikatorventils (4) den mindestens einen Kanal (26) sperrt.

11. Vorrichtung (100) nach einem der vorhergehenden Ansprüche,
wobei die erste Hydraulikkammer (17) in dem Gehäuse (11) des Dämpfungssystems (10) relativ zu dem Gehäuse (11) in Richtung des Federapparates (12) verschiebbar aufgenommen ist, wobei sich bei einer Längsverschiebung der ersten Hydraulikkammer (17) in Richtung des Federapparates (12) zwischen dem Gehäuse (11) und der dem Federapparat (12) abgewandten Stirnseite der ersten Hydraulikkammer (17) ein Unterdruck relativ zum Umgebungsdruck bildet.

12. Vorrichtung (100) nach Anspruch 11,
wobei die Wegstrecke, um welche sich die erste Hydraulikkammer (17) relativ zu dem Gehäuse (11) des Dämpfungssystems (10) in Längsrichtung (L) bewegen kann, der Wegstrecke entspricht, um welche der Federapparat (12) komprimiert wird, wenn sich der Kolbenkopf (3) von seiner hinteren Position, in welcher der Kolbenkopf (3) relativ zu der ersten Hydraulikkammer (17) maximal in Richtung des hinteren Hydraulikkammerbereiches (17b) verschoben ist, zu seiner vorderen Position verschiebt, in welcher der Kolbenkopf (3) relativ zu der ersten Hydraulikkammer (17) maximal in Richtung des vorderen Hydraulikkammerbereiches (17a) verschoben ist.

13. Vorrichtung (100) nach Anspruch 11 oder 12,
wobei der Federapparat (12) in einem unkomprimierten Zustand vorliegt, wenn der Kolbenkopf (3) in seiner vorderen Position vorliegt und die erste Hydraulikkammer (17) nicht in der Längsrichtung (L) relativ zum Gehäuse (11) des Dämpfungssystems (10) verschoben ist.

14. Vorrichtung (100) nach einem der vorhergehenden Ansprüche,
wobei ein Außengehäuse (30) vorgesehen ist, mit welchem der dem Kolbenkopf (3) gegenüberliegende Endbereich der Kolbenstange (2) verbunden ist, wobei das Gehäuse (11) des Dämpfungssystems (10) zumindest teilweise teleskopartig in dem Außengehäuse (30) relativ zu dem Außengehäuse (30) in Längsrichtung (L) verschieblich aufgenommen ist.

15. Vorrichtung (100) nach Anspruch 14,
wobei die Wegstrecke, um welche das Gehäuse (11) des Dämpfungssystems (10) relativ zu dem Außengehäuse (30) verschiebbar ist, dem Kolbenhub entspricht, den der Kolbenkopf (3) zwischen einer vorderen Position, in welcher der Kolbenkopf (3) relativ zu der ersten Hydraulikkammer (17) maximal in Richtung des vorderen Hydraulikkammerbereiches (17a) verschoben ist, und einer hinteren Position zurücklegt, in welcher der Kolbenkopf (3) relativ zu der ersten Hydraulikkammer (17) maximal in Richtung des hinteren Hydraulikkammerbereiches (17b) verschoben ist.

16. Vorrichtung (100) nach einem der vorhergehenden Ansprüche,
wobei Führungsflächen vorgesehen sind zum Führen der Bewegung der Kolbenstange (2) relativ zu dem Gehäuse (11) des Dämpfungssystems (10).

17. Vorrichtung (100) nach einem der vorhergehenden Ansprüche,
wobei der Federapparat (12) mindestens eine Feder, insbesondere Schrauben-, Teller-, Ring-, Kautschuk- oder Elastomerfeder, aufweist, welche in dem Raum zwischen dem ersten Anschlag (14) und dem zweiten Anschlag (15) gekapselt aufgenommen ist.

18. Vorrichtung (100) nach einem der vorhergehenden Ansprüche,
wobei die hydraulische Dämpfungseinrichtung (13) ein vorzugsweise mit einer Schraubenfeder, Tellerfeder, Ringfeder, Elastomerfeder oder Kautschukfeder vorgespanntes Überlastventil aufweist, welches parallel zu dem mindestens einem Multiplikatorventil (4) angeordnet ist und den Durchgang von Hydraulikflüssigkeit von dem vorderen Hydraulikkammerbereich (17a) in den hinteren Hydraulikkammerbereich (17b) und in die zweite Hydraulikkammer (18) zulässt.

## Claims

1. A device (100) for damping tractive and compressive forces, wherein the device (100) comprises the following:
- a damping system (10) accommodated in a housing (11) having a cushioning unit (12) and a hydraulic damping means (13), wherein the cushioning unit (12) is arranged between a first limit stop (14) which is in a fixed position relative to the housing (11) and a second limit stop (15) which is displaceable relative to the first limit stop (14), and wherein the hydraulic damping means (13) has a first hydraulic chamber (17) filled with hydraulic fluid and a second hydraulic chamber (18) filled with hydraulic fluid formed between said first hydraulic chamber (17) and the second limit stop (15); and
- a piston rod (2) which is displaceable in the longitudinal direction (L) relative to the housing (11) having a piston head (3) formed at an end region which is accommodated in the first hydraulic chamber (17) so as to be displaceable relative to the first hydraulic chamber (17) and which divides the first hydraulic chamber (17) into a front hydraulic chamber area (17a) distanced from the piston rod (2) and a rear hydraulic chamber area (17b) adjacent the piston rod (2) upon a longitudinal displacement relative to the first hydraulic chamber (17),
**characterized in that**
the hydraulic damping means (13) has a first overflow system via which hydraulic fluid is able to flow from the front hydraulic chamber area (17a) into the rear hydraulic chamber area (17b) and into the second hydraulic chamber (18) via at least one multiplier valve (4) upon a longitudinal movement of the piston head (3) relative to the first hydraulic chamber (17) in the direction of the front hydraulic chamber area (17a), and that
the hydraulic damping means (13) has a second overflow system via which hydraulic fluid is able to flow from the rear hydraulic chamber area (17b) and the second hydraulic chamber (18) into the front hydraulic chamber area (17a) via a non-return ball valve (7) upon a longitudinal movement of the piston head (3) relative to the first hydraulic chamber (17) in the direction of the rear hydraulic chamber area (17b).

2. The device (100) according to claim 1,
wherein a conduit system is provided which connects the first hydraulic chamber (17) to the inlet of the multiplier valve (4), wherein the effective flow cross section of the conduit system depends on how far the piston head (3) is displaced relative to the first hydraulic chamber (17) in the direction of the front hydraulic chamber area (17a).

3. The device (100) according to claim 2,
wherein the conduit system has a plurality of conduits (21, 22, 23, 24, 25) which connect the first hydraulic chamber (17) to the inlet of the multiplier valve (4), wherein the conduits (21, 22, 23, 24, 25) open into the first hydraulic chamber (17) at a distance from one another in the longitudinal direction (L) of said first hydraulic chamber (17).

4. The device (100) according to claim 2 or 3,
wherein when the piston head (3) is displaced to its maximum relative to the first hydraulic chamber (17) in the direction of the front hydraulic chamber area (17a), the conduit system has at least one conduit (21, 22, 23) which opens into the rear hydraulic chamber area (17b) and at least one conduit (24, 25) which opens into the front hydraulic chamber area (17a).

5. The device (100) according to claim 4,
wherein the at least one conduit (21, 22, 23) of the conduit system which opens into the rear hydraulic chamber area (17b) when the piston head (3) is displaced to its maximum in the direction of the front hydraulic chamber area (17a) has a non-return ball valve (8) which automatically blocks hydraulic fluid from passing through the at least one conduit (21, 22, 23) to the rear hydraulic chamber area (17b).

6. The device (100) according to any one of the preceding claims, in particular according to any one of claims 3 to 5,
wherein a gap (19) is formed at least by area between the first hydraulic chamber (17) and the housing (11) of the damping system (10), wherein the inlet of the multiplier valve (4) is connected to the first hydraulic chamber (17) via the gap (19).

7. The device (100) according to any one of the preceding claims, in particular claim 6,
wherein the non-return ball valve (7) provided between the second hydraulic chamber (18) and the front hydraulic chamber area (17a) is arranged in a conduit (29) which connects the front hydraulic chamber area (17a) to the gap (19) formed at least by area between the first hydraulic chamber (17) and the housing (11) of the damping system (10), and wherein the non-return ball valve (7) is designed to automatically block hydraulic fluid from passing from the gap (19) to the second hydraulic chamber (18).

8. The device (100) according to any one of the preceding claims,
wherein at least one conduit (28) is provided which connects the rear hydraulic chamber area (17b) to the second hydraulic chamber (18) and allows hydraulic fluid to pass from the rear hydraulic chamber area (17b) to the second hydraulic chamber (18) and vice versa.

9. The device (100) according to any one of the preceding claims,
wherein the outlet of the multiplier valve (4) opens into a valve chamber (6) which is connected to the rear hydraulic chamber area (17b) via a non-return ball valve (5), wherein the non-return ball valve (5) automatically blocks hydraulic fluid from passing from the rear-hydraulic chamber area (17b) to the valve chamber (6).

10. The device (100) according to claim 9,
wherein at least one conduit (26) is provided which directly connects the valve chamber (6) to the second hydraulic chamber (18), wherein the control piston (9) of the multiplier valve (4) blocks the at least one conduit (26) when the multiplier valve (4) is in the fully open state.

11. The device (100) according to any one of the preceding claims,
wherein the first hydraulic chamber (17) is accommodated in the housing (11) of the damping system (10) so as to be displaceable relative to the housing (11) in the direction of the cushioning unit (12), wherein a negative pressure compared to ambient pressure develops between the housing (11) and the end face of the first hydraulic chamber (17) distanced from the cushioning unit (12) upon a longitudinal displacement of the first hydraulic chamber (17) in the direction of the cushioning unit (12).

12. The device (100) according to claim 11,
wherein the distance which the first hydraulic chamber (17) is able to move in the longitudinal direction (L) relative to the housing (11) of the damping system (10) corresponds to the distance by which the cushioning unit (12) is compressed when the piston head (3) moves from its rearward position, in which the piston head (3) is displaced to its maximum relative to the first hydraulic chamber (17) in the direction of the rear hydraulic chamber area (17b), to its forward position in which the piston head (3) is displaced to its maximum relative to the first hydraulic chamber (17) in the direction of the front hydraulic chamber area (17a).

13. The device (100) according to claim 11 or 12,
wherein the cushioning unit (12) is in an uncompressed state when the piston head (3) is in its forward position and the first hydraulic chamber (17) has not been displaced in the longitudinal direction (L) relative to the housing (11) of the damping system (10).

14. The device (100) according to any one of the preceding claims,
wherein an outer housing (30) is provided to which the end region of the piston rod (2) opposite from the piston head (3) is connected, wherein the housing (11) of the damping system (10) is accommodated in the outer housing (30) so as to be at least partly telescopically displaceable in the longitudinal direction (L) relative to the outer housing (30).

15. The device (100) according to claim 14,
wherein the distance which the housing (11) of the damping system (10) is displaceable relative to the outer housing (30) corresponds to the stroke of the piston head (3) between a forward position, in which the piston head (3) is displaced to its maximum relative to the first hydraulic chamber (17) in the direction of the front hydraulic chamber area (17a), and a rearward position in which the piston head (3) is displaced relative to the first hydraulic chamber (17) to its maximum in the direction of the rear hydraulic chamber area (17b).

16. The device (100) according to any one of the preceding claims,
wherein guiding surfaces are provided to guide the movement of the piston rod (2) relative to the housing (11) of the damping system (10).

17. The device (100) according to any one of the preceding claims,
wherein the cushioning unit (12) comprises at least one spring, in particular a coil, disc, annular, rubber or elastomer spring which is accommodated in the space between the first limit stop (14) and the second limit stop (15) in an encapsulated manner.

18. The device (100) according to any one of the preceding claims,
wherein the hydraulic damping means (13) comprises an overload valve which is preferably preloaded by a coil spring, disc spring, annular spring, elastomer spring or rubber spring arranged parallel to the at least one multiplier valve (4) and which allows hydraulic fluid to pass from the front hydraulic chamber area (17a) to the rear hydraulic chamber area (17b) and to the second hydraulic chamber (18).

## Revendications

1. Dispositif (100) pour l'amortissement de forces de traction et de compression, le dispositif (100) comprenant les éléments suivants :
- un système d'amortissement (10) reçu dans un boîtier (11) avec un appareil à ressort (12) et un moyen d'amortissement hydraulique (13), dans lequel l'appareil à ressort (12) est agencé entre une première butée (14) stationnaire par rapport au boîtier (11) et une seconde butée (15) déplaçable par rapport à la première butée (14), et dans lequel le moyen d'amortissement hydraulique (13) comprend une première chambre hydraulique (17) remplie avec un liquide hydraulique et une seconde chambre hydraulique (18) remplie avec un liquide hydraulique, laquelle est formée entre la première chambre hydraulique (17) et la seconde butée (15) ; et
- une tige de piston (2) déplaçable en direction longitudinale (L) par rapport au boîtier (11) avec une tête de piston (3) réalisée dans une zone terminale, ladite tête étant reçue dans la première chambre hydraulique (17) avec possibilité de déplacement par rapport à la première chambre hydraulique (17) et, lors d'un déplacement longitudinal par rapport à la première chambre hydraulique (17), ladite tête divise la première chambre hydraulique (17) en une région antérieure de chambre hydraulique (17a) détournée de la tige de piston (2) et en une région postérieure de chambre hydraulique (17b) tournée vers la tige de piston (2),
**caractérisé en ce que**
le moyen d'amortissement hydraulique (13) comprend un premier système de déversement via lequel, lors d'un mouvement longitudinal de la tête de piston (3) par rapport à la première chambre hydraulique (17) en direction de la région antérieure de chambre hydraulique (17a), du liquide hydraulique peut s'écouler depuis la région antérieure de chambre hydraulique (17a) via au moins une valve multiplicatrice (4) jusque dans la région postérieure de chambre hydraulique (17b) et jusque dans la seconde chambre hydraulique (18), et **en ce que** le moyen d'amortissement hydraulique (13) comprend un second système de déversement via lequel, lors d'un mouvement longitudinal de la tête de piston (3) par rapport à la première chambre hydraulique (17) en direction de la région postérieure de chambre hydraulique (17b), du liquide hydraulique peut s'écouler depuis la région postérieure de chambre hydraulique (17b) et la seconde chambre hydraulique (18) via un clapet antiretour à bille (7) jusque dans la région antérieure de chambre hydraulique (17a).

2. Dispositif (100) selon la revendication 1,
dans lequel est prévu un système de canaux qui relie la première chambre hydraulique (17) à l'entrée de la valve multiplicatrice (4), de sorte que la section d'écoulement effective du système de canaux dépend de la distance sur laquelle la tête de piston (3) est déplacée par rapport à la première chambre hydraulique (17) en direction de la région antérieure de chambre hydraulique (17a).

3. Dispositif (100) selon la revendication 2,
dans lequel le système de canaux comprend une pluralité de canaux (21, 22, 23, 24, 25) qui relient la première chambre hydraulique (17) à l'entrée de la valve multiplicatrice (4), de sorte que les canaux (21, 22, 23, 24, 25) débouchent dans la première chambre hydraulique (17) à distance les uns des autres dans la direction longitudinale (L) de la première chambre hydraulique.

4. Dispositif (100) selon la revendication 2 ou 3,
dans lequel, quand la tête de piston (3) est déplacée par rapport à la première chambre hydraulique (17) au maximum en direction de la région antérieure de chambre hydraulique (17a), le système de canaux comprend au moins un canal (21, 22, 23) qui débouche dans la région postérieure de chambre hydraulique (17b), et comprend au moins un canal (24, 25) qui débouche dans la région antérieure de chambre hydraulique (17a).

5. Dispositif (100) selon la revendication 4,
dans lequel ledit au moins un canal (21, 22, 23) du système de canaux qui débouchent dans la région postérieure de chambre hydraulique (17b) lorsque la tête de piston (3) est déplacée au maximum en direction de la région antérieure de chambre hydraulique (17a) comporte un clapet antiretour à bille (8) qui bloque le passage de liquide hydraulique via ledit au moins un canal (21, 22, 23) vers la région antérieure de chambre hydraulique (17b).

6. Dispositif (100) selon l'une des revendications précédentes, en particulier selon l'une des revendications 3 à 5,
dans lequel un espace en forme de fente (19) est réalisé au moins localement entre la première chambre hydraulique (17) et le boîtier (11) du système d'amortissement (10), et l'entrée de la valve multiplicatrice (4) est reliée à la première chambre hydraulique (17) via l'espace en forme de fente (19).

7. Dispositif (100) selon l'une des revendications précédentes, en particulier la revendication 6,
dans lequel le clapet antiretour à bille (7) prévu entre la seconde chambre hydraulique (18) et la région antérieure de chambre hydraulique (17a) est agencé dans un canal (29) qui relie la région antérieure de chambre hydraulique (17a) à l'espace en forme de fente (19) réalisé au moins localement entre la première chambre hydraulique (17) et le boîtier (11) du système d'amortissement (10), et dans lequel le clapet antiretour à bille (7) est réalisé pour bloquer automatiquement un passage de liquide hydraulique depuis l'espace en forme de fente (19) vers la seconde chambre hydraulique (18)

8. Dispositif (100) selon l'une des revendications précédentes,
dans lequel il est prévu au moins un canal (28) qui relie la région postérieure de chambre hydraulique (17b) à la seconde chambre hydraulique (18) et qui permet un passage de liquide hydraulique depuis la région postérieure de chambre hydraulique (17b) vers la seconde chambre hydraulique (18) et inversement.

9. Dispositif (100) selon l'une des revendications précédentes,
dans lequel la sortie de la valve multiplicatrice (4) débouche dans une chambre de valve (6) qui est reliée à la région postérieure de chambre hydraulique (17b) via un clapet antiretour à bille (5), ledit clapet antiretour à bille (5) bloquant automatiquement le passage de liquide hydraulique depuis la région postérieure de chambre hydraulique (17b) vers la chambre de valve (6).

10. Dispositif (100) selon la revendication 9,
dans lequel il est prévu au moins un canal (26) qui relie directement la chambre de valve (6) à la seconde chambre hydraulique (18), et dans l'état totalement ouvert de la valve multiplicatrice (4) le piston de commande (9) de la valve multiplicatrice (4) bloque ledit au moins un canal (26).

11. Dispositif (100) selon l'une des revendications précédentes,
dans lequel la première chambre hydraulique (19) est reçue dans le boîtier (11) du système d'amortissement (10) avec possibilité de déplacement par rapport au boîtier (11) en direction de l'appareil à ressort (12), de sorte que lors d'un déplacement longitudinal de la première chambre hydraulique (17) en direction de l'appareil à ressort (12), il se forme entre le boîtier (11) et la face frontale de la première chambre hydraulique (17) détournée de l'appareil à ressort (12) une dépression par rapport à la pression environnante.

12. Dispositif (100) selon la revendication 11,
dans lequel le trajet sur lequel la première chambre hydraulique (17) peut se déplacer en direction longitudinale (L) par rapport au boîtier (11) du système d'amortissement (10) correspond au trajet sur lequel l'appareil à ressort (12) est comprimé quand la tête de piston (3) est déplacée depuis sa position postérieure dans laquelle la tête de piston (3) est déplacée par rapport à la première chambre hydraulique (17) au maximum en direction de la région postérieure de chambre hydraulique (17b), jusqu'à sa position antérieure dans laquelle la tête de piston (3) est déplacée par rapport à la première chambre hydraulique (17) au maximum en direction de la région antérieure de chambre hydraulique (17a).

13. Dispositif (100) selon la revendication 11 ou 12,
dans lequel l'appareil à ressort (12) se présente dans un état non comprimé quand la tête de piston (3) se présente dans sa position antérieure et que la première chambre hydraulique (17) n'est pas déplacée en direction longitudinale (L) par rapport au boîtier (11) du système d'amortissement (10).

14. Dispositif (100) selon l'une des revendications précédentes,
dans lequel il est prévu un boîtier extérieur (30) avec lequel est reliée la zone terminale, opposée à la tête de piston (3), de la tige de piston (2), et le boîtier (11) du système d'amortissement (10) est reçu dans le boîtier extérieur (30) avec possibilité de déplacement au moins partiellement télescopique en direction longitudinale (L) par rapport au boîtier extérieur (30).

15. Dispositif (100) selon la revendication 14,
dans lequel le trajet sur lequel le boîtier (11) du système d'amortissement (10) est déplaçable par rapport au boîtier extérieur (30) correspond à la course de piston parcourue par la tête de piston (3) entre une position antérieure dans laquelle la tête de piston (3) est déplacée par rapport à la première chambre hydraulique (17) au maximum en direction de la région antérieure de chambre hydraulique (17a), et une position postérieure dans laquelle la tête de piston (3) est déplacée par rapport à la première chambre hydraulique (17) au maximum en direction de la région postérieure de chambre hydraulique (17b).

16. Dispositif (100) selon l'une des revendications précédentes,
dans lequel il est prévu des surfaces de guidage pour guider le déplacement de la tige de piston (2) par rapport au boîtier (11) du système d'amortissement (10).

17. Dispositif (100) selon l'une des revendications précédentes,
dans lequel l'appareil à ressort (12) comprend au moins un ressort, en particulier un ressort hélicoïdal, une rondelle-ressort, un ressort annulaire, un ressort en caoutchouc ou un ressort en élastomère, qui est reçu de façon encapsulée dans l'espace entre la première butée (14) et la seconde butée (15).

18. Dispositif (100) selon l'une des revendications précédentes,
dans lequel le moyen d'amortissement hydraulique (13) comprend un clapet de surcharge de préférence précontraint avec un ressort hélicoïdal, une rondelle-ressort, un ressort annulaire, un ressort en élastomère ou un ressort en caoutchouc, ledit clapet étant agencé parallèlement à ladite au moins une valve multiplicatrice (4) et permettant le passage de liquide hydraulique depuis la région antérieure de chambre hydraulique (17a) jusque dans la région postérieure de chambre hydraulique (17b) et jusque dans la seconde chambre hydraulique (18).
